# EUROPEAN PATENT SPECIFICATION

(11) **EP 1 316 697 B1**
(45) Date of publication and mention of the grant of the patent: **02.07.2008**
(21) Application number: 00956899.9
(22) Date of filing: 04.09.2000
(51) Int. Cl.: F02B 23/10, F02M 61/18

(54) **CYLINDER INJECTION TYPE SPARK IGNITION ENGINE**
FREMDGEZÜNDETE BRENNKRAFTMASCHINE MIT DIREKTEINSPRITZUNG
MOTEUR A ALLUMAGE PAR ETINCELLE DU TYPE A INJECTION DIRECTE

(43) Date of publication of application: 04.06.2003
(73) Proprietor: Hitachi, Ltd., Tokyo 100-8280 (JP)
(72) Inventor: KIHARA, Yuusuke c/o Hitachi, Ltd. Intellectual Property Group, Chiyoda-ku Tokyo 100-8220 (JP); OOSUGA, Minoru c/o Hitachi, Ltd. Intellectual Property Group, Chiyoda-ku Tokyo 100-8220 (JP); NOGI, Toshiharu c/o Hitachi, Ltd. Intellectual Property Group, Chiyoda-ku Tokyo 100-8220 (JP); SHIRAISHI, Takuya c/o Hitachi, Ltd. Intellectual Property Group, Chiyoda-ku Tokyo 100-8220 (JP); SUKEGAWA, Yoshihiro c/o Hitachi, Ltd. Intellectual Property Group, Chiyoda-ku Tokyo 100-8220 (JP); TOKUYASU, Noboru c/o Hitachi, Ltd. Intellectual Property Group, Chiyoda-ku Tokyo 100-8220 (JP); MIYAJIMA, Ayumu c/o Hitachi, Ltd. Intellectual Property Group, Chiyoda-ku Tokyo 100-8220 (JP)
(74) Representative: Beetz & Partner
(86) International application number: PCT/JP2000/005984
(87) International publication number: WO 2002/020957

(56) References cited:
- EP-A- 0 824 185
- EP-A- 0 879 944
- EP-A- 0 918 155
- EP-A- 1 006 265
- DE-A- 19 947 342
- JP-A- 1 273 873
- JP-A- 10 054 246
- JP-A- 10 281 039
- JP-A- 10 331 641
- JP-A- 11 159 421
- JP-A- 60 030 419
- JP-A- 2000 230 438
- JP-A- 2000 303 889
- JP-A- 2000 329 036
- US-A- 5 327 864

## Description

### Technical Field

The present invention relates to an cylinder injection type spark ignition engine for directly injecting fuel into a combustion chamber. More particularly, the present invention relates to an cylinder injection type spark ignition engine suitable for performing stratified charge combustion in low- and medium-load operating regions under a condition in which an operational air-fuel ratio is higher than a theoretical mixture ratio.

### Background Art

In a conventional cylinder injection type spark ignition engine, for the purpose of reducing fuel consumption and exhaust gas, the engine is operated in a low- and medium-load operating regions under a condition in which a ratio of an amount of air to an amount of injected fuel is higher than a theoretical mixture ratio of 14.7. However, if fuel and air are evenly mixed, a fuel concentration would be lean and flame propagation would be difficult to satisfactorily develop. To enable combustion to be performed even under a fuel-lean operating condition, therefore, stratified charge combustion is required in which an air-fuel mixture is stratified in the vicinity of an ignition plug and then burnt.

As a method for performing stratified charge combustion in the conventional cylinder injection type spark ignition engine, it is known as disclosed in JP,A 11-200866, for example, that an air flow sucked into a combustion chamber is given with a vertical swirl flow (hereinafter referred to as a "tumble") and a recess is formed at the center of a piston crown surface to improve retention of the tumble. With this method, fuel injected from a fuel injection valve is transported to an ignition plug in a laminar form while riding on the tumble, whereby the stratified charge combustion can be realized.

As another known method, JP,A 6-81656, for example, discloses that a tumble is given to air sucked from an intake port into a combustion chamber, and a cylinder head is provided with a fuel injection valve having multiple injection ports, i.e., a first injection port oriented in a direction toward an ignition plug and a second injection port oriented in a direction along a tumble flow. With this method, fuel injected through the first injection port forms a fuel-rich gas mixture in the vicinity of the ignition plug, and fuel injected through the second injection port rides on the tumble and forms a fuel-lean gas mixture with a most part of air in the combustion chamber. As a result, the fuel-rich gas mixture and the fuel-lean gas mixture are stratified so that the stratified charge combustion can be realized.

EP 0 879 944 A2 describes a cylinder direct injection spark-ignition engine comprising a piston formed at its piston crown with a generally circular cavity having a center axis which is offset from the center axis of the piston towards the intake valve. A spark plug is provided such that its tip end section is disposed above a part of a peripheral portion of the circular cavity, which part is located closer to the center axis of the piston than to the periphery of the piston. A device for generating a swirl of the intake air in the combustion chamber is provided. A fuel injector valve directly injects the fuel into the combustion chamber and has an axis which is inclined relative to a bottom flat surface of the cylinder head and which gradually approaches the bottom flat surface in a direction from the intake valve to the exhaust valve. The fuel ejection hole of the fuel injector valve has an axis inclined relative to the axis of the fuel injector valve so as to form a first angle which is smaller than a second angle formed by the axis of the fuel injector valve, relative to the bottom flat surface of the cylinder head.

US 5 327 864A describes a cylinder injection type spark ignition engine with two spark plugs. The second spark plug is located off center and ignites the ignition spray when the lead fluid has already passed.

However, the method disclosed in JP,A 11-200866 has accompanied the following problems. Because the fuel-air mixture is transported with the tumble sucked from the intake port into the combustion chamber, the air speed of the tumble is also reduced in proportion to the engine revolution speed at low-speed revolutions such as during idling, thus resulting in a difficulty in transporting the fuel-air mixture to the ignition plug. When injection timing is delayed to retard the ignition as required, for example, in the case of causing earlier activation of a catalyst at the startup, the tumble is damped with delay of the injection timing, thus resulting in a difficulty in transporting the fuel-air mixture to the ignition plug.

Also, with the method disclosed in JP,A 6-81656, the fuel-rich gas mixture is stratified in the vicinity of the ignition plug by directly injecting a spray toward the ignition plug from the first injection port of the fuel injection valve. However, the following problems have arisen in that the fuel-air mixture is dispersed with the tumble generated in the combustion chamber, which possibly raises a difficulty in realizing the stratified charge combustion, and smoldering of the plug occurs at the time of ignition because of accumulation of fuel sprays at the ignition plug.

An object of the present invention is to provide an cylinder injection type spark ignition engine capable of realizing stratified charge combustion with high robustness without resorting to a tumble produced in a combustion chamber.

To achieve the above object a cylinder injection type spark ignition engine having the features of claim 1 is provided. The present invention provides a cylinder injection type spark ignition engine including a fuel injection valve for directly injecting fuel into a combustion chamber, in which the fuel is injected into the combustion chamber during a compression stroke by the fuel injection valve, and a fuel-air mixture is fired by an ignition plug to perform stratified charge combustion, wherein the spark ignition engine comprises lead fluid generating means for generating, separately from an air flow supplied to the combustion chamber through an intake port, a fluid flow supplied in a direction toward the ignition plug prior to succeeding ignition fuel spray, and wherein a fuel-air mixture evaporated from an ignition fuel spray is led by the fluid flow generated by the lead fluid generating means and is supplied to the ignition plug at ignition timing.

With those features, the fuel-air mixture evaporated from the ignition fuel spray can be supplied to the ignition plug with the aid of the lead fluid, and hence stratified charge combustion with high robustness can be realized without resorting to a tumble produced in a combustion chamber.

### Brief Description of the Drawings

Fig. 1 is a sectional view, sectioned along the center of an engine intake pipe, showing an overall construction of a cylinder injection type spark ignition engine according to a first embodiment of the present invention.
Fig. 2 is a sectional view, sectioned along the center of an engine cylinder, showing the overall construction of the cylinder injection type spark ignition engine according to the first embodiment of the present invention.
Fig. 3 is an overall side view of a fuel injection valve used in the cylinder injection type spark ignition engine according to the first embodiment of the present invention.
Fig. 4 is an enlarged sectional view of a principal part of the fuel injection valve used in the cylinder injection type spark ignition engine according to the first embodiment of the present invention.
Fig. 5 is a bottom view of a principal part of the fuel injection valve used in the cylinder injection type spark ignition engine according to the first embodiment of the present invention.
Fig. 6 is a side view showing a shape of a fuel spray injected from the fuel injection valve used in the cylinder injection type spark ignition engine according to the first embodiment of the present invention.
Fig. 7 is a sectional view taken along A-A in Fig. 6.
Fig. 8 is a side view showing a spray state immediately after fuel injection in the cylinder injection type spark ignition engine according to the first embodiment of the present invention.
Fig. 9 is a plan view showing a spray state immediately after fuel injection in the cylinder injection type spark ignition engine according to the first embodiment of the present invention.
Fig. 10 is a side view showing a spray state at 20° before the top dead center in the cylinder injection type spark ignition engine according to the first embodiment of the present invention.
Fig. 11 is a plan view showing a spray state at 20° before the top dead center in the cylinder injection type spark ignition engine according to the first embodiment of the present invention.
Fig. 12 is a side view showing a spray state before the top dead center in the cylinder injection type spark ignition engine according to the first embodiment of the present invention.
Fig. 13 is a plan view showing a spray state before the top dead center in the cylinder injection type spark ignition engine according to the first embodiment of the present invention.
Fig. 14 is an explanatory side view showing a stable combustion region in the cylinder injection type spark ignition engine according to the first embodiment of the present invention.
Fig. 15 is a side view showing a shape of a fuel spray injected from a fuel injection valve used in an cylinder injection type spark ignition engine according to a second embodiment of the present invention.
Fig. 16 is a sectional view taken along A-A in Fig. 15.
Fig. 17 is an enlarged sectional view of a principal part of the fuel injection valve used in the cylinder injection type spark ignition engine according to the second embodiment of the present invention.
Fig. 18 is a bottom view of a principal part of the fuel injection valve used in the cylinder injection type spark ignition engine according to the second embodiment of the present invention.
Fig. 19 is a plan view showing a spray state immediately after fuel injection in the cylinder injection type spark ignition engine according to the second embodiment of the present invention.
Fig. 20 is a plan view showing a spray state at 20° before the top dead center in the cylinder injection type spark ignition engine according to the second embodiment of the present invention.
Fig. 21 is a plan view showing a spray state before the top dead center in the cylinder injection type spark ignition engine according to the second embodiment of the present invention.
Fig. 22 is a sectional view, sectioned along the center of an engine cylinder, showing an overall construction of an cylinder injection type spark ignition engine according to a third embodiment not covered by the scope of the present invention.
Fig. 23 is a side view showing a spray state immediately after fuel injection in the cylinder injection type spark ignition engine according to a third embodiment not covered by the scope of the present invention.
Fig. 24 is a plan view showing a spray state at 20° before the top dead center in the cylinder injection type spark ignition engine according to the third embodiment not covered by the scope of the present invention.
Fig. 25 is a side view showing a spray state before the top dead center in the cylinder injection type spark ignition engine according to the third embodiment not covered by the scope of the present invention.
Fig. 26 is a sectional view, sectioned along the center of an engine intake pipe, showing an overall construction of an cylinder injection type spark ignition engine according to a fourth embodiment of the present invention.
Fig. 27 is an overall side view of a fuel injection valve used in the cylinder injection type spark ignition engine according to the fourth embodiment of the present invention.
Fig. 28 is an enlarged sectional view of a principal part of the fuel injection valve used in the cylinder injection type spark ignition engine according to the fourth embodiment of the present invention.
Fig. 29 is a bottom view of a principal part of the fuel injection valve used in the cylinder injection type spark ignition engine according to the fourth embodiment of the present invention.
Fig. 30 is a side view showing shapes of a fuel spray and an air jet stream both injected from the fuel injection valve used in the cylinder injection type spark ignition engine according to the fourth embodiment of the present invention.
Fig. 31 is a sectional view taken along A-A in Fig. 30.
Fig. 32 is a side view showing a spray state immediately after fuel injection in the cylinder injection type spark ignition engine according to the fourth embodiment of the present invention.
Fig. 33 is a side view showing a spray state at 20° before the top dead center in the cylinder injection type spark ignition engine according to the fourth embodiment of the present invention.
Fig. 34 is a side view showing a spray state before the top dead center in the cylinder injection type spark ignition engine according to the fourth embodiment of the present invention.
Fig. 35 is an overall side view of a fuel injection valve used in an cylinder injection type spark ignition engine according to a fifth embodiment of the present invention.
Fig. 36 is an enlarged sectional view of a principal part of the fuel injection valve used in the cylinder injection type spark ignition engine according to the fifth embodiment of the present invention.
Fig. 37 is a bottom view of a principal part of the fuel injection valve used in the cylinder injection type spark ignition engine according to the fifth embodiment of the present invention.
Fig. 38 is a side view showing a shape of a fuel spray injected from the fuel injection valve used in the cylinder injection type spark ignition engine according to the fifth embodiment of the present invention.
Fig. 39 is a sectional view taken along A-A in Fig. 38.
Fig. 40 is a side view showing a spray state immediately after fuel injection in the cylinder injection type spark ignition engine according to the fifth embodiment of the present invention.
Fig. 41 is a side view showing a spray state at 20° before the top dead center in the cylinder injection type spark ignition engine according to the fifth embodiment of the present invention.
Fig. 42 is a side view showing a spray state before the top dead center in the cylinder injection type spark ignition engine according to the fifth embodiment of the present invention.
Fig. 43 is a side view of an cylinder injection type spark ignition engine according to a sixth embodiment of the present invention.
Fig. 44 is a side view showing a spray state at 20° before the top dead center in the cylinder injection type spark ignition engine according to the sixth embodiment of the present invention.
Fig. 45 is a side view showing a spray state before the top dead center in the cylinder injection type spark ignition engine according to the sixth embodiment of the present invention.
Fig. 46 is a system block diagram showing a configuration of an engine control system using an cylinder injection type spark ignition engine according to a seventh embodiment of the present invention.
Fig. 47 is a graph for explaining operating regions in the engine control system using the cylinder injection type spark ignition engine according to the seventh embodiment of the present invention.
Fig. 48 is a chart for explaining details of control executed by the engine control system using the cylinder injection type spark ignition engine according to the seventh embodiment of the present invention.

### Best Mode for Carrying Out the Invention

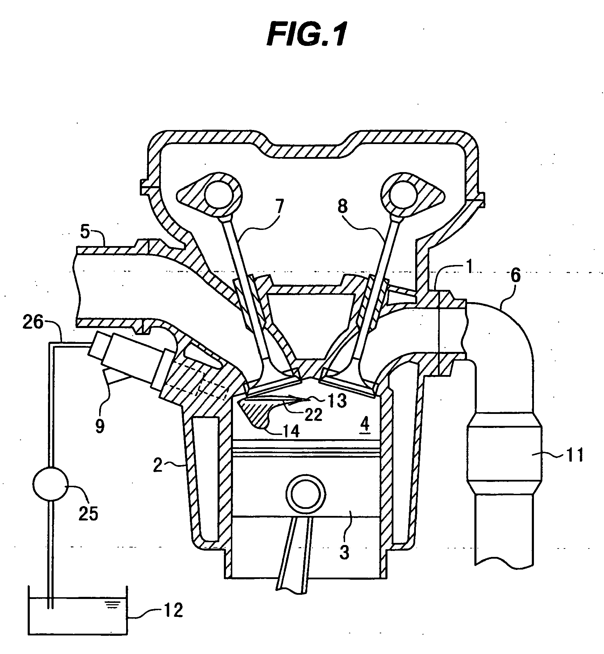

The construction and operation of an cylinder injection type spark ignition engine according to a first embodiment of the present invention will be described below with reference to Figs. 1 to 14.

A description is first made of an overall construction of the cylinder injection type spark ignition engine according to this embodiment with reference to Figs. 1 and

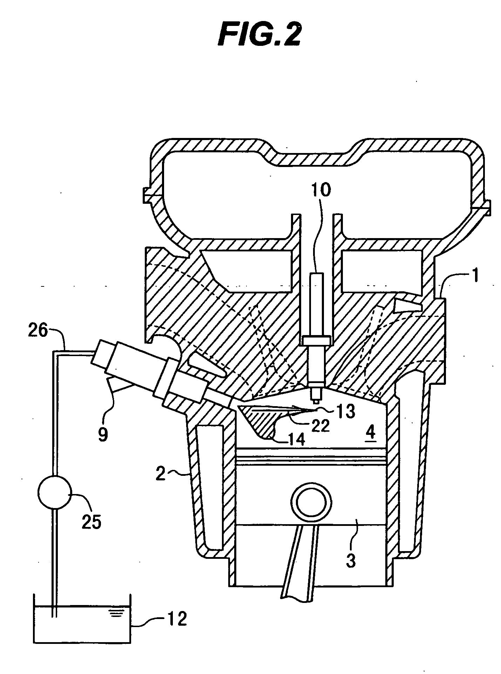

Fig. 1 is a sectional view, sectioned along the center of an engine intake pipe, showing the overall construction of the cylinder injection type spark ignition engine according to the first embodiment of the present invention. Fig. 2 is a sectional view, sectioned along the center of an engine cylinder, showing the overall construction of the cylinder injection type spark ignition engine according to the first embodiment of the present invention.

As shown in Fig. 1, a combustion chamber 4 is defined by a cylinder head 1, a cylinder block 2, and a piston 3 inserted in the cylinder block 2. A crown surface of the piston 3 is flat. Two intake ports 5 and two exhaust ports 6 are opened to the combustion chamber 4. At openings of the two intake ports 5, two intake valves 7 are provided respectively to open and close the openings. Also, at openings of the two exhaust ports 6, two exhaust valves 8 are provided respectively to open and close the openings. A fuel injection valve 9 is provided in a wall surface of the combustion chamber 4 on the intake side. Further, as shown in Fig. 2, an ignition plug 10 is provided above the combustion chamber 4 at the center thereof.

As shown in Fig. 1, a catalyst 11 is disposed on the side behind the exhaust port 6. A fuel tank 12 and a high-pressure pump 25 are connected to the fuel injection valve 9 through a fuel pipe 26. The high-pressure pump 25 pressurizes fuel supplied from the fuel tank 12 so that the fuel can be injected from the fuel injection valve 9 even in state in which the pressure in the combustion chamber 4 is high.

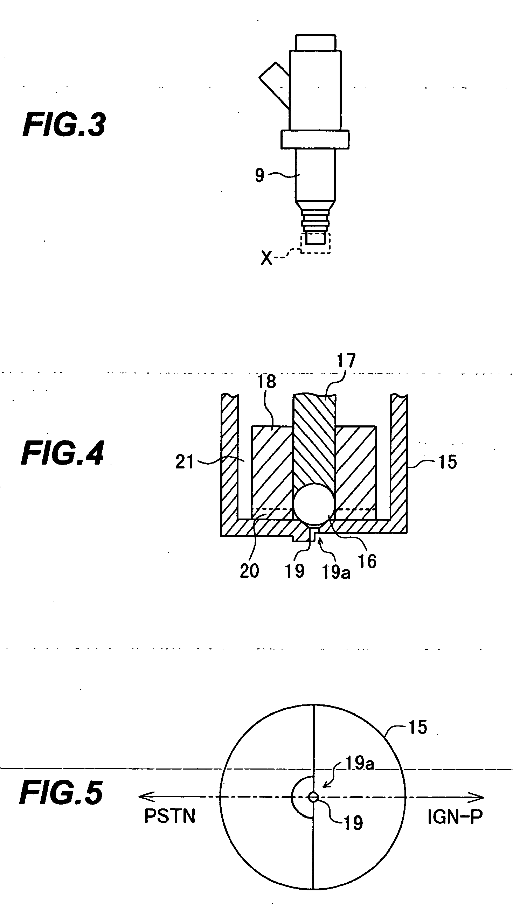

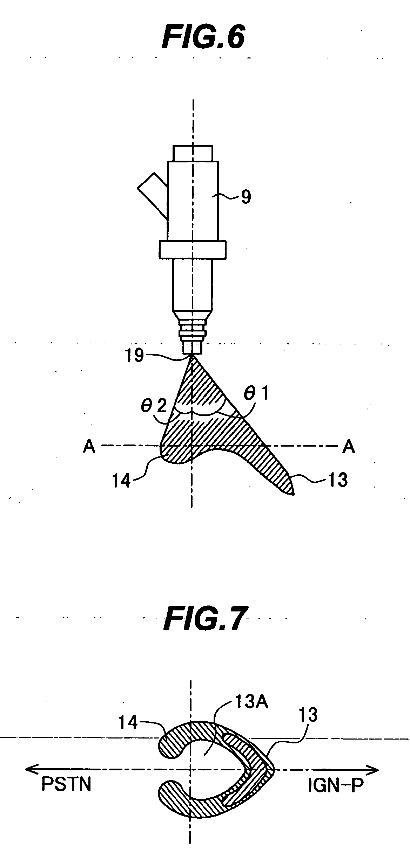

A fuel spray injected from the fuel injection valve 9 comprises, as shown in Fig. 2, a lead spray 13 injected toward the ignition plug and an ignition spray 14 injected toward the piston side. The construction of the fuel injection valve 9 for forming such a fuel spray will be described later with reference to Figs. 3 to 5. Also, the shape of the fuel spray injected from the fuel injection valve 9 will be described later with reference to Figs. 6 and 7.

Next, the construction of the fuel injection valve used in the cylinder injection type spark ignition engine according to this embodiment will be described with reference to Figs. 3 to 5.

Fig. 3 is an overall side view of the fuel injection valve used in the cylinder injection type spark ignition engine according to the first embodiment of the present invention. Fig. 4 is an enlarged sectional view of a principal part of the fuel injection valve used in the cylinder injection type spark ignition engine according to the first embodiment of the present invention. Fig. 5 is a bottom view of a principal part of the fuel injection valve used in the cylinder injection type spark ignition engine according to the first embodiment of the present invention.

Fig. 3 shows the construction, as viewed from side, of the fuel injection valve 9 according to this embodiment. Fig. 4 shows, in an enlarged scale, a region X, surrounded by broken lines, of a distal end portion of the fuel injection valve 9.

As shown in Fig. 4, a nozzle portion 15 of the fuel injection valve 9 includes a ball valve 16, a rod 17 connected to the ball valve 16, a swirler 18 for giving a swirling force to a spray, an injection port 19, an axial groove 21, and a radial groove 20. In this embodiment, the injection port 19 formed at a fore end of the nozzle portion 15 is not symmetric in the left-and-right direction, and a cutout 19a is formed at a part of the injection port 19. In the illustrated example, the cutout 19a is formed over an angular range of 180 degrees.

When the ball valve 16 is opened, fuel flows through the axial groove 21 and the radial groove 20 and is then injected through the injection port 19 while a swirling force is applied to the fuel. Because the cutout 19a is formed in the injection port 19, a lead spray and an ignition spray are formed as described later with reference to Figs. 6 and 7.

In an example shown in Fig. 5, a direction of arrow IGN-P represents the ignition plug side, and a direction of arrow PSTN represents the piston side. Stated otherwise, the lead spray is injected in a direction toward the ignition plug by arranging the fuel injection valve 9 such that the cutout 19a of the injection port 19 is oriented toward the ignition plug side.

With reference to Figs. 6 and 7, a description is now made of a shape of a fuel spray injected from the fuel injection valve used in the cylinder injection type spark ignition engine according to this embodiment.

Fig. 6 is a side view showing the shape of the fuel spray injected from the fuel injection valve used in the cylinder injection type spark ignition engine according to the first embodiment of the present invention. Fig. 7 is a sectional view taken along A-A in Fig. 6.

As shown in Fig. 6, the shape of the fuel spray sprayed through the injection port 19 of the fuel injection valve 9 is not symmetrical in the left-and-right direction because the cutout is formed in the injection port. A spray angle θ1 of a lead spray 13 relative to the center line of the fuel injection valve 9 is, for example, 30 degrees. Also, a spray angle θ2 of an ignition spray 14 relative to the center line of the fuel injection valve 9 is, for example, 20 degrees.

Further, as shown in Fig. 7, with the cutout formed in the injection port 19, the fuel spray has a sectional shape in which a void 13A is formed in a part of the spray. In addition, the lead spray 13 injected toward the ignition plug 10 has a higher flow density than the ignition spray 14. Therefore, the lead spray 13 reaches over a longer distance than the ignition spray 14.

The injection angle θ1 of the lead spray 13 and the injection angle θ2 of the ignition spray 14 are variously changeable depending on the shape of the cutout formed in the injection port 19. Regarding various structures of a fuel injection valve having a cutout formed in an injection port, the applicant has already filed Japanese Patent Application No. 11-355502 (as an internal priority application on the basis of Japanese Patent Application No. 11-71412). Details of the shape of the cutout are described in Japanese Patent Application No. 11-355502.

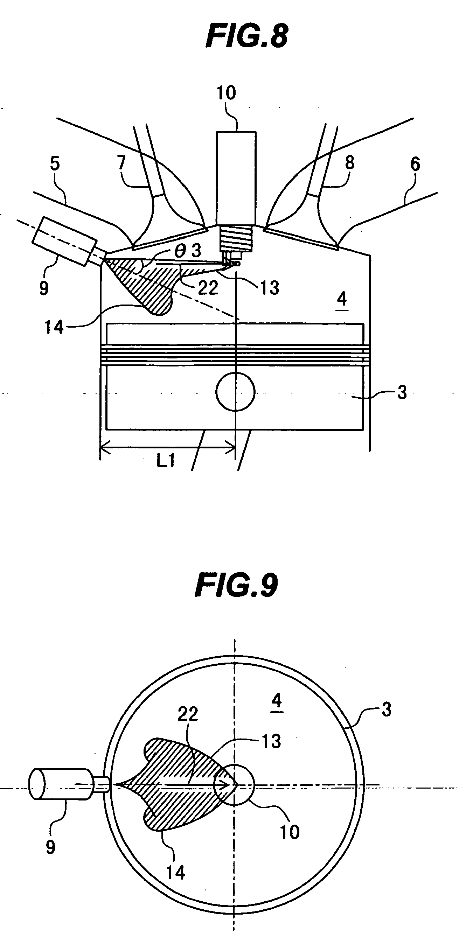

With reference to Figs. 8 to 13, a description is now made of the operation of the cylinder injection type spark ignition engine according to this embodiment during fast idling immediately after the engine startup.

Fig. 8 is a side view showing a spray state immediately after fuel injection in the cylinder injection type spark ignition engine according to the first embodiment of the present invention. Fig. 9 is a plan view showing a spray state immediately after fuel injection in the cylinder injection type spark ignition engine according to the first embodiment of the present invention.

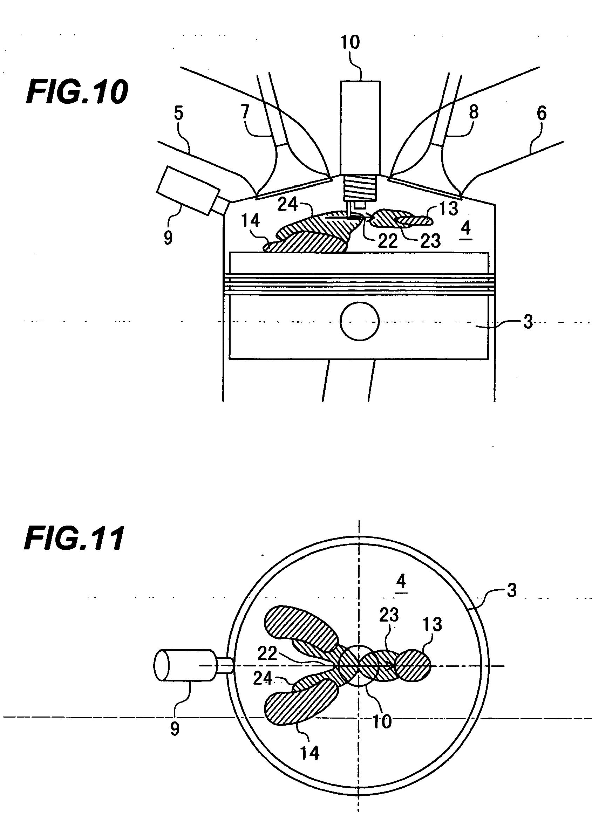

Also, Fig. 10 is a side view showing a spray state at 20° before the top dead center in the cylinder injection type spark ignition engine according to the first embodiment of the present invention. Fig. 11 is a plan view showing a spray state at 20° before the top dead center in the cylinder injection type spark ignition engine according to the first embodiment of the present invention.

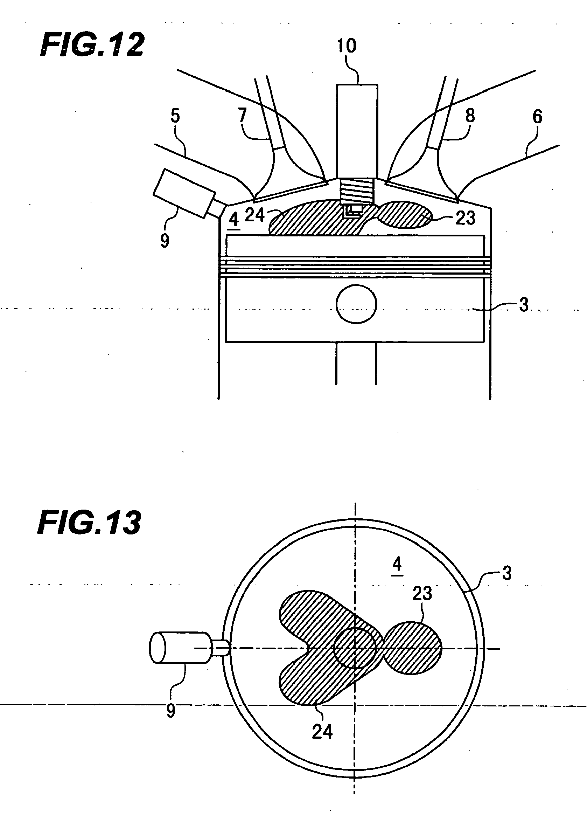

Further, Fig. 12 is a side view showing a spray state before the top dead center in the cylinder injection type spark ignition engine according to the first embodiment of the present invention. Fig. 13 is a plan view showing a spray state before the top dead center in the cylinder injection type spark ignition engine according to the first embodiment of the present invention.

Note that, for the sake of explaining the operation, Figs. 8 to 13 are illustrated in the simplified form. Also, in Figs. 8 to 13, the same symbols as those in Fig. 1 denote the same components. Figs. 8 to 13 represent an engine operating state at the engine revolution speed of about 1000 rpm under a low-load condition.

Generally, the catalyst 11 cannot develop its cleaning action unless temperature is raised to a relatively high level. At the engine startup, therefore, it is required to perform stable combustion with a small amount of fuel in the form of stratified charge combustion, thereby suppressing exhaust gas discharged from the combustion chamber 4, and to retard the ignition timing to discharge the generated exhaust gas at high temperature to the exhaust port 6 for earlier activation of the catalyst. One method for retarding the ignition timing is to delay the fuel injection timing. However, when the injection timing is delayed, the pressure in the combustion chamber 4 is raised to a high level of not lower than 10 atm. Hence, spray penetration with the conventionally employed fuel spray is insufficient, and the fuel cannot reach the ignition plug.

In view of the above point, this embodiment executes a sequence of steps from the intake stroke to the compression stroke as follows.

In the intake stroke, the intake valve 7 is opened and the piston 3 is moved downward, whereupon air is introduced to flow into the combustion chamber 4 through the intake port 5. With the intake port 5 obliquely mounted, a weak tumble flow is formed in the combustion chamber 4. In this embodiment, therefore, a similar effect to that obtained with a tumble generating mechanism can be obtained without the provision of the tumble generating mechanism. It is to be however noted that, since this embodiment is featured in employing the lead spray, the tumble generating mechanism is not an essential component in this embodiment, but it may be provided as required.

In the compression stroke, the intake valve 7 is closed and the piston 3 is moved upward, whereupon the temperature and pressure in the combustion chamber 4 are both raised. As the piston 3 approaches the top dead center, the tumble generated in the combustion chamber 4 is gradually damped. Nearly at the time when the piston 3 reaches the top dead center, the tumble flow can no longer retain its original shape and turns to a disturbed flow. In the case of retarding the ignition, the fuel injection timing is set to 40° before the top dead center so that the ignition timing is approximately matched with the top dead center. The optimum ignition timing differs depending on individual engines.

The fast idling operation immediately after the engine startup will be described below with reference to Figs. 8 to 13.

First, a description is made of situations immediately after the fuel injection with reference to Figs. 8 and 9.

A spark tip of the ignition plug 10 is arranged in the direction of extension of the lead spray 13 injected from the fuel injection valve 9. Generally, in engines, a mounting position of the ignition plug 10 and a mounting position of the fuel injection valve 9 are limited from the standpoint of a mounting space. Therefore, when the ignition plug 10 is arranged, for example, above the combustion chamber 4 at the center thereof, the practically allowed mounting position of the fuel injection valve 9 is near the wall surface of the combustion chamber 4 on the intake side. On this occasion, assuming that the angle formed between the center axis of the fuel injection valve 9 and the ignition plug 10 is θ3 and the distance from the injection port of the fuel injection valve 9 to the spark tip of the ignition plug 10 is L1, the shape of the cutout in the injection port of the fuel injection valve 9 is set such that the spray angle θ1 of the lead spray 13 is almost equal to the angle θ3.

The lead spray 13 injected from the fuel injection valve 9 has a higher spray density than the ignition spray 14 and hence reaches the vicinity of the ignition plug 10 prior to the ignition spray 14. The ignition spray 14 advances toward the piston 3 more slowly than the lead spray 13. Friction produced between the lead spray 13 and air causes a jet stream 22 directing from the fuel injection valve 9 toward the ignition plug 10. The ignition spray 14 does not cause a strong jet stream because the spray is relatively widely dispersed and has a lower spray density. Since the jet stream 22 is generated by the spray itself, it has features of being not affected by the operating condition and having high robustness.

Next, a description is made of situations at 20° before the top dead center with reference to Figs. 10 and 11.

With the lapse of time, the piston 3 is further moved upward and the ignition spray 14 stagnates on an upper surface of the piston 3. At this time, the above-mentioned jet stream 22 leads, to the ignition plug 10, only an ignition fuel-air mixture 24 evaporated from the ignition spray 14. The lead spray 13 is evaporated while passing the ignition plug 10, and forms a combustion fuel-air mixture 23 around the ignition plug 10. At this timing, the ignition plug 10 can be fired, but the situations are not yet suitable for ignition because the lead spray 13 is present around the ignition plug 10.

Next, a description is made of situations at the ignition timing, i.e., when the piston reaches the top dead center, with reference to Figs. 12 and 13.

When the piston 3 comes closer to the compression top dead center, the internal pressure of the combustion chamber 4 is abruptly raised, and hence the jet stream 22 disappears until the ignition fuel-air mixture 24 almost reaches the ignition plug 10. Therefore, the ignition fuel-air mixture 24 can be stratified in the vicinity of the ignition plug 10 without going past the ignition plug 10 to a large extent. Also, because the lead spray 13 having generated the jet stream 22 is most evaporated with the upward movement of the piston 3, the combustion fuel-air mixture 23 is stratified in a position having passed the ignition plug 10.

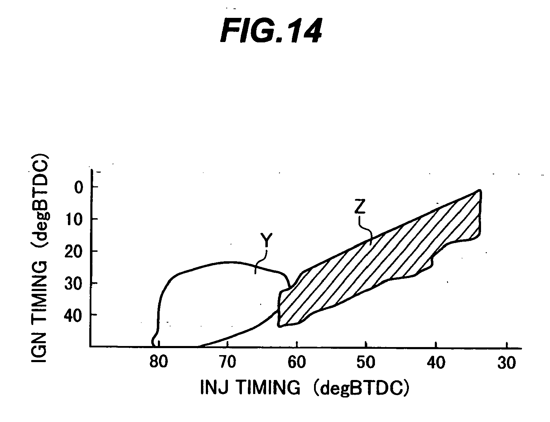

With reference to Fig. 14, a description is now made of a region in which stable combustion can be realized according to this embodiment.

Fig. 14 is an explanatory side view showing a stable combution region in the cylinder injection type spark ignition engine according to the first embodiment of the present invention. In Fig. 14, the horizontal axis represents fuel injection timing (degBTDC: angle before the top dead center). The vertical axis represents ignition timing (degBTDC: angle before the top dead center). The engine revolution speed is 1200 rpm under a low-load operating condition.

A region Y represents a region in which stable combustion can be realized with a conventional air guide method. The conventional air guide method means here a method in which a tumble generating mechanism is provided at an intake port and a fuel-air mixture is stratified around an ignition plug with a generated tumble. According to the conventional air guide method, stable combustion cannot be realized when the fuel injection timing is later than 60° before the top dead center, and therefore the stable combustion region does not occur later than 20° before the top dead center.

On the other hand, a region Z represents a region in which stable combustion can be realized with a spray lead method according to this embodiment. The spray lead method means a method in which, as described above, the fuel-air mixture is stratified around the ignition plug with the aid of the jet stream generated by the lead spray. According to the spray lead method in this embodiment, it was confirmed that the fuel injection timing can be retarded from 62° before the top dead center to 35° before the top dead center, and therefore stable combustion can be realized even at the ignition timing near the top dead center. Also, according to the spray lead method, fuel consumption and the exhaust amount of NOx were reduced with the effect of retarding the ignition. As a result, stable stratified charge combustion can be realized under conditions of delayed fuel injecting timing and low-speed revolutions such as during idling.

With this embodiment, as described above, the ignition fuel-air mixture 24 and the combustion fuel-air mixture 23 can be stratified around the ignition plug 10 with the ignition plug 10 being at the center, and stable stratified charge combustion can be realized at the ignition timing. Hence, the stratified charge combustion with high robustness can be realized without resorting to the tumble produced in the combustion chamber.

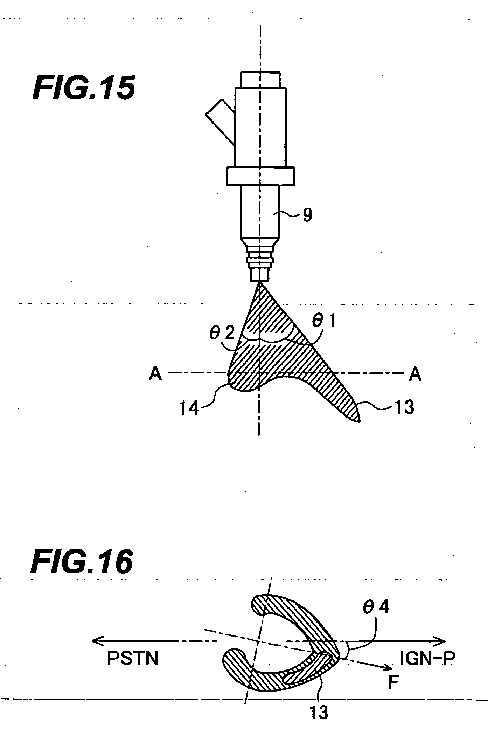

The construction and operation of an cylinder injection type spark ignition engine according to a second embodiment of the present invention will be described below with reference to Figs 15 to 21. The overall construction of the cylinder injection type spark ignition engine according to this second embodiment is the same as that shown in Figs. 1 and 2.

With reference to Figs. 15 and 16, a description is first made of a shape of a fuel spray injected from a fuel injection valve used in the cylinder injection type spark ignition engine according to this embodiment.

Fig. 15 is a side view showing the shape of the fuel spray injected from the fuel injection valve used- in the cylinder injection type spark ignition engine according to the second embodiment of the present invention. Fig. 16 is a sectional view taken along A-A in Fig. 15.

As shown in Fig. 15, similarly to the shape of the fuel spray shown in Fig. 6, the shape of the fuel spray sprayed from the injection port 19 of the fuel injection valve 9 is not symmetric in the left-and-right direction because a cutout is formed in the injection port.

Also, as shown in Fig. 16, similarly to the shape of the fuel spray shown in Fig. 7, the fuel spray has a sectional shape in which a void 13A is formed in a part of the spray with the cutout formed in the injection port 19. The lead spray 13 injected toward the ignition plug 10 has a higher flow density than the ignition spray 14. Therefore, the lead spray 13 reaches over a longer distance than the ignition spray 14.

In this embodiment, a direction F of injection of the lead spray 13 is inclined at an angle θ4 relative to a direction IGN-P toward the ignition plug. Stated otherwise, the lead spray 13 injected from the fuel injection valve 9 is prevented from striking against the ignition plug 10. In the example shown in Fig. 7, because the lead spray 13 is injected in the direction in which it strikes against the ignition plug 10, the ignition plug may cause smoldering. On the other hand, in this embodiment, the lead spray 13 is injected offset from the direction toward the ignition plug 10 and smoldering of the ignition plug can be prevented.

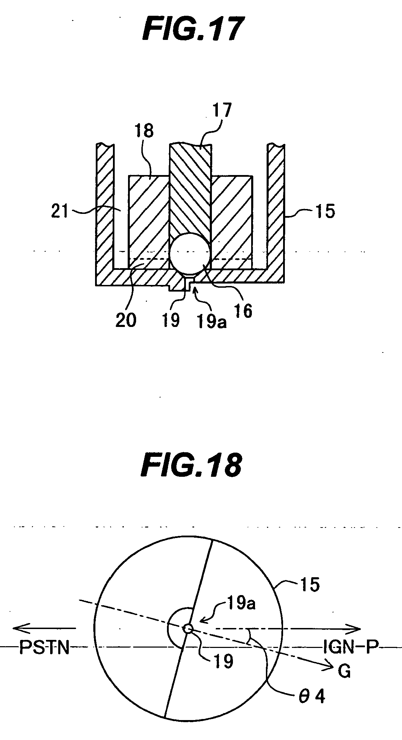

With reference to Figs. 17 and 18, a description is now made of the construction of the fuel injection valve used in the cylinder injection type spark ignition engine according to this embodiment.

Fig. 17 is an enlarged sectional view of a principal part of the fuel injection valve used in the cylinder injection type spark ignition engine according to the second embodiment of the present invention. Fig. 18 is a bottom view of a principal part of the fuel injection valve used in the cylinder injection type spark ignition engine according to the second embodiment of the present invention.

The fuel injection valve 9 shown in Fig. 17 has the same construction as that of the fuel injection valve 9 shown in Fig. 4. The injection port 19 formed at the fore end of the nozzle portion 15 is not symmetric in the left-and-right direction, and the cutout 19a is formed at a part of the injection port 19. In the illustrated example, the cutout 19a is formed over an angular range of 180 degrees.

Then, as shown in Fig. 18, a direction G in which the center of the cutout 19a is oriented is inclined at the angle θ4 relative to the direction IGN-P toward the ignition plug. With this arrangement, the lead spray 13 injected from the fuel injection valve 9 is sprayed offset from the direction toward the ignition plug.

The offset angle θ4 is changed depending on the spray angle θ1 of the lead spray 13 shown in Fig. 15. For example, when the spray angle θ1 of the lead spray 13 is 35°, the offset angle θ4 is set to about 10°. Also, when the spray angle θ1 of the lead spray 13 is 40° the offset angle θ4 is set to about 15°.

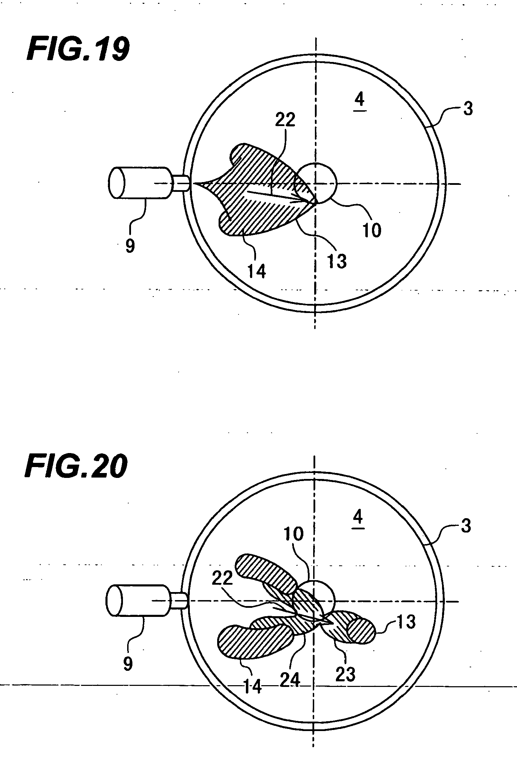

With reference to Figs. 19 to 21, a description is now made of the operation of the cylinder injection type spark ignition engine according to this embodiment during fast idling immediately after the engine startup.

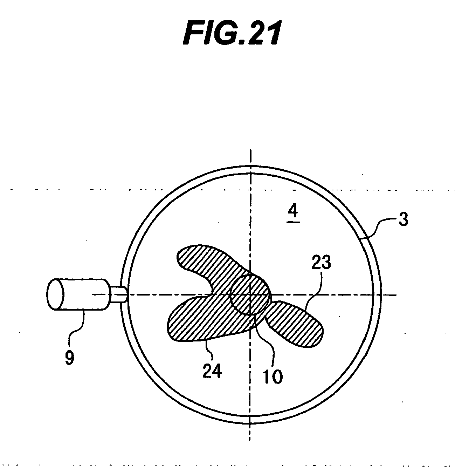

Fig. 19 is a plan view showing a spray state immediately after fuel injection in the cylinder injection type spark ignition engine according to the second embodiment of the present invention. Fig. 20 is a plan view showing a spray state at 20° before the top dead center in the cylinder injection type spark ignition engine according to the second embodiment of the present invention. Fig. 21 is a plan view showing a spray state before the top dead center in the cylinder injection type spark ignition engine according to the second embodiment of the present invention.

Note that, for the sake of explaining the operation, Figs. 19 to 21 are illustrated in the simplified form. Also, in Figs. 19 to 21, the same symbols as those in Fig. 1 denote the same components. Figs. 19 to 21 represent an engine operating state at the engine revolution speed of about 1000 rpm under a low-load condition. Furthermore, the operation from the intake stroke to a stage before fuel injection in the compression stroke is the same as that in the above-described embodiment.

First, a description is made of situations immediately after the fuel injection with reference to Fig. 19.

While the lead spray 13 reaches the vicinity of the ignition plug 10 prior to the ignition spray 14, the lead spray 13 does not directly strike against the ignition plug 10 and reaches a position slightly deviated from the ignition plug 10. Friction produced between the lead spray 13 and air causes a jet stream 22 directing from the fuel injection valve 9 toward the ignition plug 10. The jet stream 22 is also oriented slightly offset from a direction toward the ignition plug 10 as with the lead spray 13.

Next, a description is made of situations at 20° before the top dead center with reference to Fig. 20.

With the lapse of time, the piston 3 is moved upward and the ignition spray 14 stagnates on the upper surface of the piston 3. While the jet stream 22 is oriented slightly offset from the direction toward the ignition plug 10, a fuel-air mixture evaporated from an upper portion, as viewed in the drawing, of the ignition spray 14 is led by the jet stream 22 while passing the ignition plug 10. The lead spray 13 is evaporated and then forms a combustion fuel-air mixture 23 around the ignition plug 10.

Next, a description is made of situations at the ignition timing, i.e., when the piston reaches the top dead center, with reference to Fig. 21.

When the piston 3 comes closer to the compression top dead center, the internal pressure of the combustion chamber 4 is abruptly raised, and hence the jet stream 22 having led the combustion fuel-air mixture 24 to the ignition plug 10 disappears until the combustion fuel-air mixture 24 almost reaches the ignition plug 10. Therefore, the combustion fuel air mixture 24 can be stratified in the vicinity of the ignition plug 10 without going past the ignition plug 10 to a large extent. Also, the lead spray 13 having generated the jet stream 22 is mostly evaporated and forms the combustion fuel-air mixture 23, which is stratified in a position just a little past the ignition plug 10. Accordingly, the fuel-air mixture can be stratified around the ignition plug 10 and stable stratified charge combustion can be realized at the ignition timing.

Also in this embodiment, as indicated by the region Z shown in Fig. 14, the fuel injection timing can be retarded to 35° before the top dead center, and therefore stable combustion can be realized even at the ignition timing near the top dead center. As a result of the effect of retarding the ignition, therefore, fuel consumption and the exhaust amount of NOx can be reduced.

With this embodiment, as described above, the combustion fuel-air mixture 24 can be stratified around the ignition plug 10 with the aid of the jet stream 22 without directing the lead spray 13 and the jet stream 22 directly toward the ignition plug 10. Hence, the stratified charge combustion with high robustness can be realized without resorting to the tumble produced in the combustion chamber.

Further, since the lead spray 13 and the jet stream 22 are formed offset from the direction toward the ignition plug 10, smoldering of the ignition plug can be prevented.

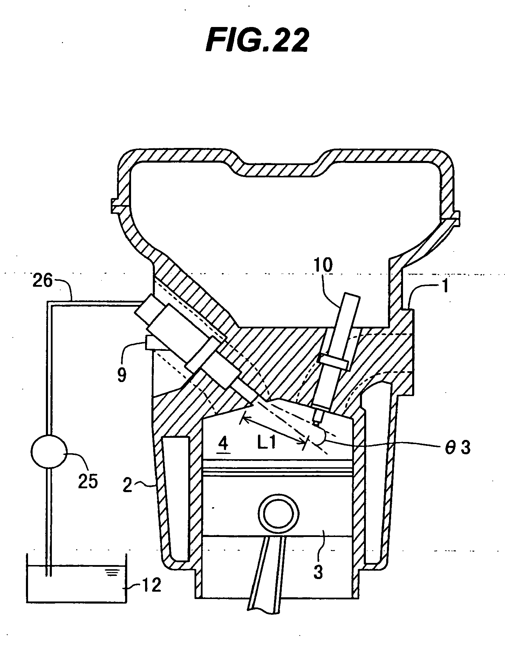

The construction and operation of an cylinder injection type spark ignition engine according to a third embodiment not covered by the scope of the present invention will be described below with reference to Figs. 22 to 25.

A description is first made of the overall construction of the cylinder injection type spark ignition engine according to this third embodiment with reference to Fig. 22.

Fig. 22 is a sectional view, sectioned along the center of an engine cylinder, showing the overall construction of the cylinder injection type spark ignition engine according to the third embodiment not covered by the scope of the present invention.

A combustion chamber 4 is defined by a cylinder head 1, a cylinder block 2, and a piston 3 inserted in the cylinder block 2. A crown surface of the piston 3 is flat. As with the embodiment of Fig. 1, two intake ports and two exhaust ports are opened to the combustion chamber 4. At openings of the two intake ports, two intake valves are provided respectively to open and close the openings. Also, at openings of the two exhaust ports, two exhaust valves are provided respectively to open and close the openings. An ignition plug 10 is provided above the combustion chamber 4 in a position sandwiched by the two exhaust ports and not at an upper center of the cylinder as defined in claim 1. Further, a fuel injection valve 9 is provided above the combustion chamber 4 in a position sandwiched by the two intake ports.

A fuel tank 12 and a high-pressure pump 25 are connected to the fuel injection valve 9 through a fuel pipe 26. The high-pressure pump 25 pressurizes fuel supplied from the fuel tank 12 so that the fuel can be injected from the fuel injection valve 9 even in a state in which the pressure in the combustion chamber 4 is high.

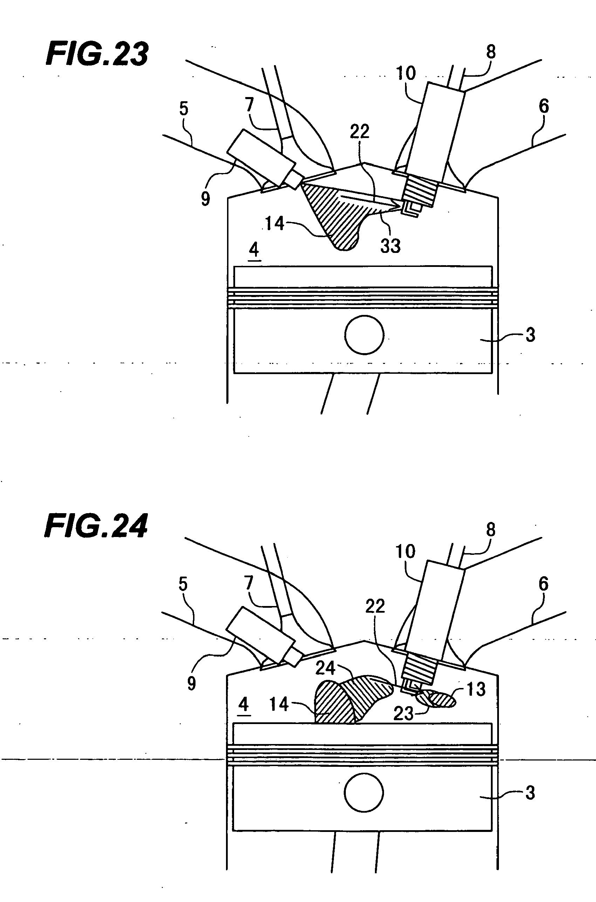

A fuel spray injected from the fuel injection valve 9 comprises, as described later with reference to Fig. 23, a lead spray injected toward the ignition plug and an ignition spray injected toward the piston side. The construction of the fuel injection valve 9 for forming such a fuel spray is the same as that described above with reference to Figs. 3 to 5.

Even with change in the mounting position of the ignition plug 10 or the fuel injection valve 9, the relative positional relationship between the ignition plug 10 and the fuel injection valve 9 is kept the same when the fuel spray injected from the fuel injection valve 9 has the same shape. More specifically, as described above with reference to Fig. 8, a spark tip of the ignition plug 10 is arranged in the direction of extension of the lead spray injected from the fuel injection valve 9. The angle θ3 formed between the center axis of the fuel injection valve 9 and the ignition plug 10 is set almost equal to the spray angle θ1 of the lead spray. Also, a distance L1 from the injection port of the fuel injection valve 9 to the spark tip of the ignition plug 10 is set equal to that shown in Fig. 8.

With reference to Figs. 23 to 25, a description is now made of the operation of the cylinder injection type spark ignition engine according to this embodiment during fast idling immediately after the engine startup.

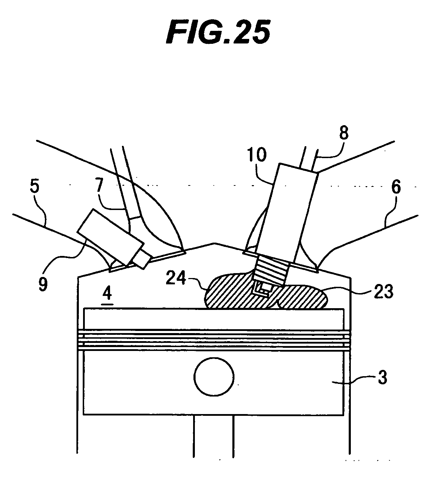

Fig. 23 is a plan view showing a spray state immediately after fuel injection in the cylinder injection type spark ignition engine according to the third embodiment not covered by the scope of the present invention. Fig. 24 is a plan view showing a spray state at 20° before the top dead center in the cylinder injection type spark ignition engine according to the third embodiment not covered by the scope of the present invention. Fig. 25 is a plan view showing a spray state before the top dead center in the cylinder injection type spark ignition engine according to the third embodiment not covered by the scope of the present invention.

Note that, for the sake of explaining the operation, Figs. 23 to 25 are illustrated in the simplified form. Also, in Figs. 23 to 25, the same symbols as those in Fig. 20 denote the same components. Figs. 23 to 25 represent an engine operating state at the engine revolution speed of about 1000 rpm under a low-load condition during fast idling at the engine startup. Furthermore, the operation from the intake stroke to a stage before fuel injection in the compression stroke is the same as that in the above-described embodiment.

First, a description is made of situations immediately after the fuel injection with reference to Fig. 23.

The lead spray 13 injected from the fuel injection valve 9 has a higher spray density than the ignition spray 14 and hence reaches the vicinity of the ignition plug 10 prior to the ignition spray 14. Friction produced between the lead spray 13 and air causes a jet stream 22 directing from the fuel injection valve 9 toward the ignition plug 10.

Next, a description is made of situations at 20° before the top dead center with reference to Fig. 24.

With the lapse of time, the piston 3 is moved upward and the ignition spray 14 stagnates on the upper surface of the piston 3. The jet stream 22 leads, to the ignition plug 10, only a combustion fuel-air mixture 24 evaporated from the ignition spray 14. The lead spray 13 is evaporated while passing the ignition plug 10, and forms a combustion fuel-air mixture 23 around the ignition plug 10.

Next, a description is made of situations at the ignition timing, i.e., when the piston reaches the top dead center, with reference to Fig. 25.

When the piston 3 comes closer to the compression top dead center, the internal pressure of the combustion chamber 4 is abruptly raised, and hence the jet stream 22 disappears until the combustion fuel-air mixture 24 almost reaches the ignition plug 10. Therefore, the combustion fuel-air mixture 24 can be stratified in the vicinity of the ignition plug 10 without going past the ignition plug 10 to a large extent. On the other hand, the combustion fuel-air mixture 23 generated from the lead spray 13 stagnates in a position just a little past the ignition plug 10. Accordingly, the combustion fuel-air mixture 24 and the combustion fuel-air mixture 22 can be stratified around the ignition plug 10 as shown, and stable stratified charge combustion can be realized at the ignition timing.

Also in this embodiment, as indicated by the region Z shown in Fig. 14, the fuel injection timing can be retarded to 35° before the top dead center, and therefore stable combustion can be realized even at the ignition timing near the top dead center. As a result of the effect of retarding the ignition, therefore, fuel consumption and the exhaust amount of NOx can be reduced.

With this embodiment, as described above, it is just required that the jet stream 22 is generated over a distance sufficient to lead the ignition fuel-air mixture 24 to the ignition plug 10, without particular restrictions on the positions of the fuel injection valve 9 and the ignition plug 10. Also with this embodiment, the ignition fuel-air mixture 24 can be stratified around the ignition plug 10. Hence, the stratified charge combustion with high robustness can be realized without resorting to the tumble produced in the combustion chamber.

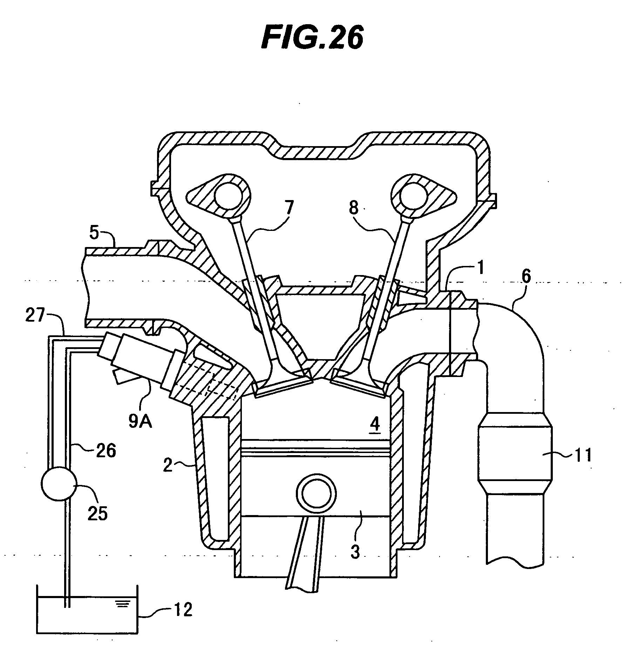

The construction and operation of an cylinder injection type spark ignition engine according to a fourth embodiment of the present invention will be described below with reference to Figs. 26 to 34.

A description is first made of the overall construction of the cylinder injection type spark ignition engine according to this fourth embodiment with reference to Fig. 26.

Fig. 26 is a sectional view, sectioned along the center of an engine intake pipe, showing the overall construction of the cylinder injection type spark ignition engine according to the fourth embodiment of the present invention.

A combustion chamber 4 is defined by a cylinder head 1, a cylinder block 2, and a piston 3 inserted in the cylinder block 2. A crown surface of the piston 3 is flat. Two intake ports 5 and two exhaust ports 6 are opened to the combustion chamber 4. At openings of the two intake ports 5, two intake valves 7 are provided respectively to open and close the openings. Also, at openings of the two exhaust ports 6, two exhaust valves 8 are provided respectively to open and close the openings. A fuel injection valve 9A is provided in a wall surface of the combustion chamber 4 on the intake side. The construction of the fuel injection valve 9A will be described later with reference to Figs. 26 to 28. To supply air under high pressure to the fuel injection valve 9A, an air pipe 27 is extended from a high-pressure pump 25 to the fuel injection valve 9A for connection between them. Further, as with the arrangement shown in Fig. 2, an ignition plug is provided above the combustion chamber 4 at the center thereof.

A catalyst 11 is disposed on the side behind the exhaust port 6. A fuel tank 12 and the high-pressure pump 25 are connected to the fuel injection valve 9A through a fuel pipe 26. The high-pressure pump 25 pressurizes fuel supplied from the fuel tank 12 so that the fuel can be injected from the fuel injection valve 9 even in a state in which the pressure in the combustion chamber 4 is high.

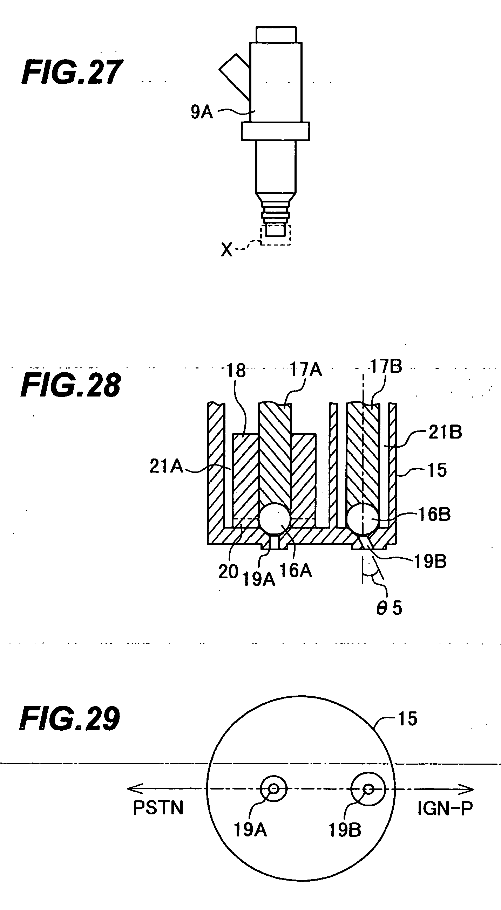

Next, the construction of the fuel injection valve used in the cylinder injection type spark ignition engine according to this embodiment will be described with reference to Figs. 27 to 29.

Fig. 27 is an overall side view of the fuel injection valve used in the cylinder injection type spark ignition engine according to the fourth embodiment of the present invention. Fig. 28 is an enlarged sectional view of a principal part of the fuel injection valve used in the cylinder injection type spark ignition engine according to the fourth embodiment of the present invention. Fig. 29 is a bottom view of a principal part of the fuel injection valve used in the cylinder injection type spark ignition engine according to the fourth embodiment of the present invention.

Fig. 27 shows the construction, as viewed from side, of the fuel injection valve 9A according to this embodiment. Fig. 28 shows, in an enlarged scale, a region X, surrounded by broken lines, of a distal end portion of the fuel injection valve 9A.

As shown in Fig. 28, a nozzle portion 15 of the fuel injection valve 9A includes ball valves 16A, 16B, rod 17A, 17B connected respectively to the ball valves 16A, 16B, a swirler 18 for giving a swirling force to a spray, a fuel injection port 19A, an air injection port 19B, an axial groove 21A, a radial groove 20, and an air passage 21B. In this embodiment, the cutout 19a described above with reference to Fig. 4 is not provided in the fuel injection port 19A formed at a fore end of the nozzle portion 15.

The fuel injection port 19A is an injection port for injecting fuel therethrough. The air injection port 19B is an injection port for injecting air therethrough. The air injection port 19B is formed to incline at an angle θ5 with respect to the center axis of the fuel injection valve 9A. Also, the air injection port 19B is arranged such that it is oriented toward the ignition plug 10 when the fuel injection valve 9A is mounted to an engine. The fuel injection port 19A has the same internal structure as that shown in Fig. 4. Because of no cutout provided in the fuel injection port 19A, a cone spray uniform in the circumferential direction is injected through the fuel injection port.

The air injection port 19B is provided with the ball valve 16B for controlling injection of air and the rod 17B connected to the ball valve 16B. The pressurized air supplied from the high-pressure pump is filled into the air passage 21B through the air pipe 27. When the ball valve 16B is moved upward, an air flow under high pressure is injected through the air injection port 19B. This air flow corresponds to the jet stream 22 shown in Fig. 1. The ball valves 16A, 16B are controlled such that they are moved at the same time. In order to form the jet stream a little in advance of the fuel injection, the ball valve 16B may be operated to open at timing slightly earlier than the ball valve 16A.

In an example shown in Fig. 29, a direction of arrow IGN-P represents the ignition plug side, and a direction of arrow PSTN represents the piston side. Stated otherwise, the jet stream is injected toward the ignition plug by arranging the fuel injection valve 9A such that the air injection port 19B is oriented toward the ignition plug side.

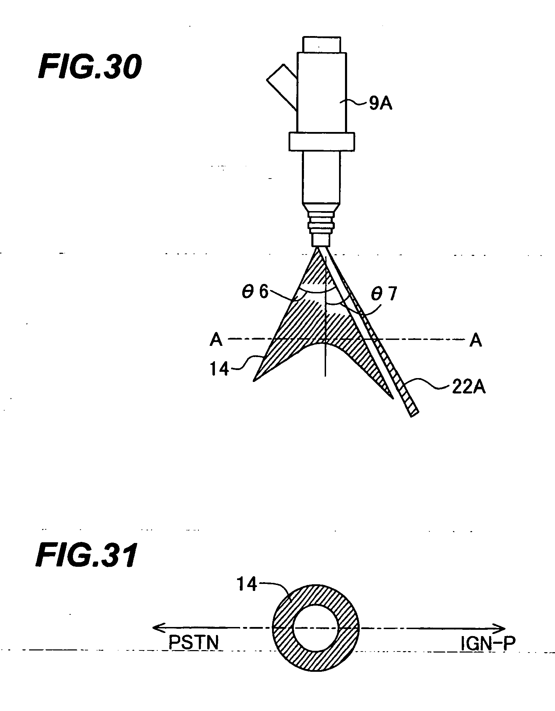

With reference to Figs. 30 and 31, a description is now made of shapes of a fuel spray and an air jet stream both injected from the fuel injection valve used in the cylinder injection type spark ignition engine according to this embodiment.

Fig. 30 is a side view showing the shapes of the fuel spray and the air jet stream both injected from the fuel injection valve used in the cylinder injection type spark ignition engine according to the fourth embodiment of the present invention. Fig. 31 is a sectional view taken along A-A in Fig. 30.

As shown in Figs. 30 and 31, a fuel spray 14 sprayed through the injection port 19A of the fuel injection valve 9A has a cone shape uniform in the circumferential direction. Also, as shown in Fig. 29, an air jet stream 22A under high pressure is injected through the air injection port 19B. Assuming that the spray angle of the fuel spray 14 is θ6, a spray angle θ7 of the jet stream 22A is about + 2 to 3° greater than 1/2 of the spray angle θ6. For example, when the spray angle θ6 is 50°, the spray angle θ7 is set to 28°. An angle θ5 shown in Fig. 28 is set equal to the spray angle θ7.

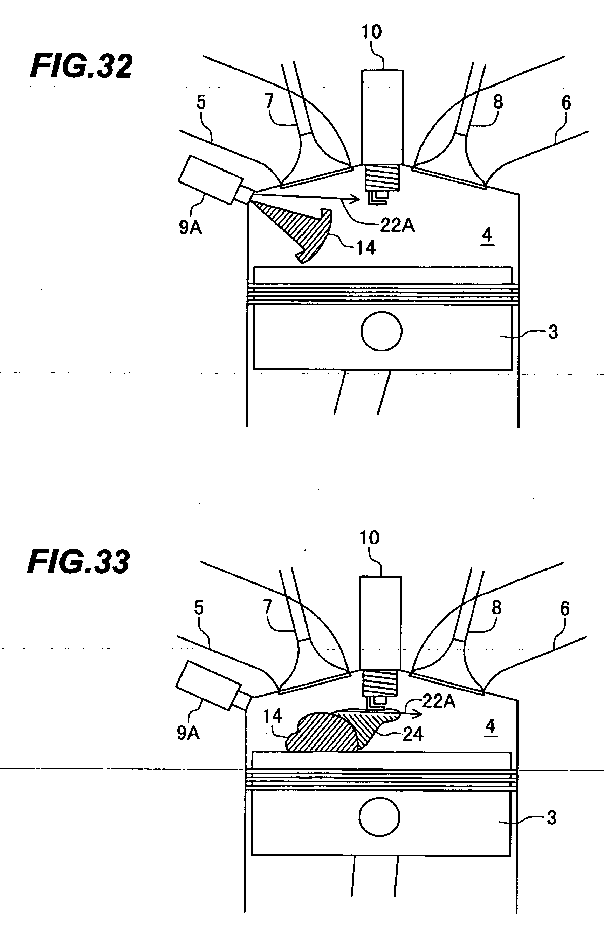

With reference to Figs. 32 to 34, a description is now made of the operation of the cylinder injection type spark ignition engine according to this embodiment during fast idling immediately after the engine startup.

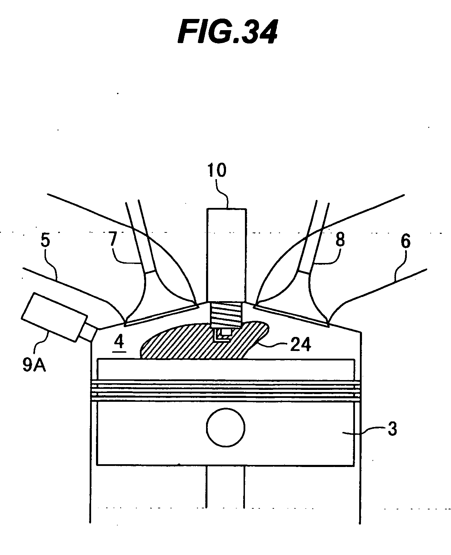

Fig. 32 is a plan view showing a spray state immediately after fuel injection in the cylinder injection type spark ignition engine according to the fourth embodiment of the present invention. Fig. 33 is a plan view showing a spray state at 20° before the top dead center in the cylinder injection type spark ignition engine according to the fourth embodiment of the present invention. Fig. 34 is a plan view showing a spray state before the top dead center in the cylinder injection type spark ignition engine according to the fourth embodiment of the present invention.

Note that, for the sake of explaining the operation, Figs. 32 to 34 are illustrated in the simplified form. Also, in Figs. 32 to 34, the same symbols as those in Fig. 26 denote the same components. Figs. 32 to 34 represent an engine operating state at the engine revolution speed of about 1000 rpm under a low-load condition during fast idling at the engine startup. Furthermore, the operation from the intake stroke to a stage before fuel injection in the compression stroke is the same as that in the above-described embodiment.

First, a description is made of situations immediately after the fuel injection with reference to Fig. 32.

The jet stream 22A is injected from the air injection port 19B of the fuel injection valve 9A in a direction directly toward the ignition plug 10, while the cone-shaped ignition spray 14 is injected through the air injection port 19A toward the piston 3 located below the ignition plug 10.

Next, a description is made of situations at 20° before the top dead center with reference to Fig. 33.

With the lapse of time, the piston 3 is moved upward and the ignition spray 14 stagnates on the upper surface of the piston 3. At this time, the jet stream 22A leads, to the ignition plug 10, only a combustion fuel-air mixture 24 evaporated from the ignition spray 14.

Next, a description is made of situations at the ignition timing, i.e., when the piston reaches the top dead center, with reference to Fig. 34.

When the piston 3 comes closer to the compression top dead center, the internal pressure of the combustion chamber 4 is abruptly raised, and hence the jet stream 22A having led the combustion fuel-air mixture 24 to the ignition plug 10 disappears until the combustion fuel-air mixture 24 almost reaches the ignition plug 10. Therefore, the combustion fuel-air mixture 24 can be stratified in the vicinity of the ignition plug 10 without going past the ignition plug 10 to a large extent.

Also in this embodiment, fuel consumption and the exhaust amount of NOx can be reduced as a result of the effect of retarding the ignition.

With this embodiment, as described above, since the jet stream 22A is directly injected from the fuel injection valve 9B, the amount of fuel required for the operation can be all injected as the ignition spray 14 and the fuel-air mixture can be concentrated to the ignition plug 10. Therefore, the combustion fuel-air mixture 24 can be stratified around the ignition plug 10 with the aid of the jet stream 22A without directing the jet stream directly toward the ignition plug 10. Hence, the stratified charge combustion with high robustness can be realized without resorting to the tumble produced in the combustion chamber. Additionally, since the jet stream directed toward the ignition plug is an air jet stream, smoldering of the ignition plug can be prevented.

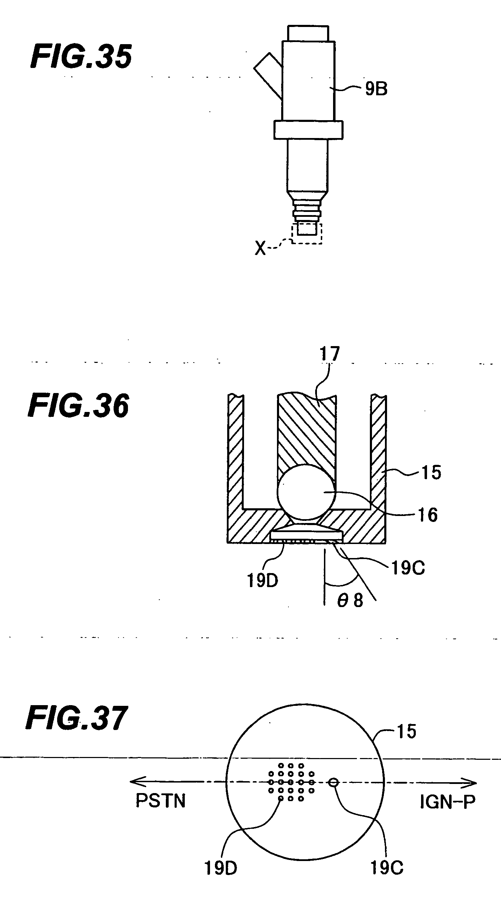

The construction and operation of an cylinder injection type spark ignition engine according to a fifth embodiment of the present invention will be described below with reference to Figs. 35 to 42. The overall construction of the cylinder injection type spark ignition engine according to this fifth embodiment is the same as that shown in Figs. 1 and 2.

A description is first made of the construction of a fuel injection valve used in the cylinder injection type spark ignition engine according to this embodiment with reference to Figs. 35 to 37.

Fig. 35 is an overall side view of the fuel injection valve used in the cylinder injection type spark ignition engine according to the fifth embodiment of the present invention. Fig. 36 is an enlarged sectional view of a principal part of the fuel injection valve used in the cylinder injection type spark ignition engine according to the fifth embodiment of the present invention. Fig. 37 is a bottom view of a principal part of the fuel injection valve used in the cylinder injection type spark ignition engine according to the fifth embodiment of the present invention.

Fig. 35 shows the construction, as viewed from side, of a fuel injection valve 9B according to this embodiment. Fig. 36 shows, in an enlarged scale, a region X, surrounded by broken lines, of a distal end portion of the fuel injection valve 9B.

As shown in Fig. 36, a nozzle portion 15 of the fuel injection valve 9B is of a structure having a fuel injection port 19C for generating a lead spray 13 and a fuel injection port 19D for generating an ignition spray 14. The fuel injection port 19C is formed to incline at an angle 68 with respect to the center axis of the fuel injection valve 9B such that the lead spray 13 is oriented toward the ignition plug 10 when the fuel injection valve 9B is mounted to an engine.

Also, as shown in Fig. 37, the fuel injection port 19C has a greater diameter than the fuel injection port 19D. Further, the fuel injection port 19D comprises a plurality of small-diameter ports, which are provided in number enough to inject fuel in amount required for the operation and are arranged in dispersed positions so as to reduce the spray density of the ignition spray 14.

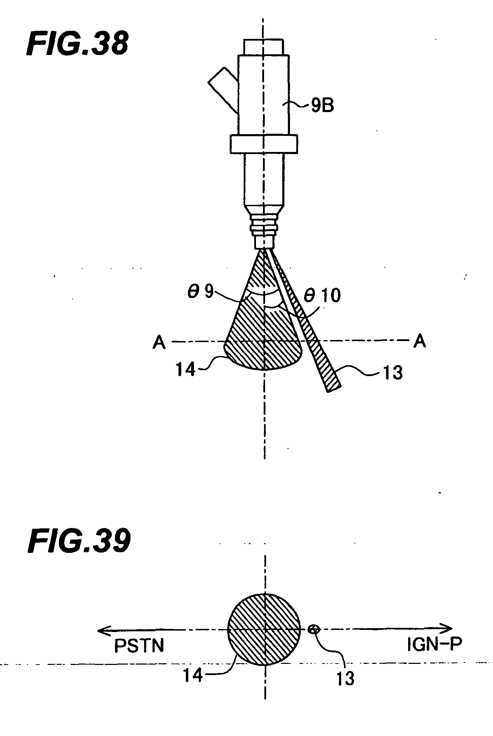

With reference to Figs. 38 and 39, a description is now made of shapes of fuel sprays injected from the fuel injection valve used in the cylinder injection type spark ignition engine according to this embodiment.

Fig. 38 is a side view showing the shapes of the fuel sprays injected from the fuel injection valve used in the cylinder injection type spark ignition engine according to the fifth embodiment of the present invention. Fig. 39 is a sectional view taken along A-A in Fig. 38.

As shown in Figs. 38 and 39, the fuel spray 14 sprayed through the injection port 19D of the fuel injection valve 9B has a shape uniform in the circumferential direction. Also, the lead spray 13 of fuel under high pressure is injected through the injection port 19C of the fuel injection valve 9B. Assuming that the spray angle of the fuel spray 14 is θ9, a spray angle θ10 of the lead spray 13 is about + 2 to 3° greater than 1/2 of the spray angle θ9. For example, when the spray angle θ9 is 50°, the spray angle θ10 is set to 28°. An angle θ8 shown in Fig. 36 is set equal to the spray angle θ10.

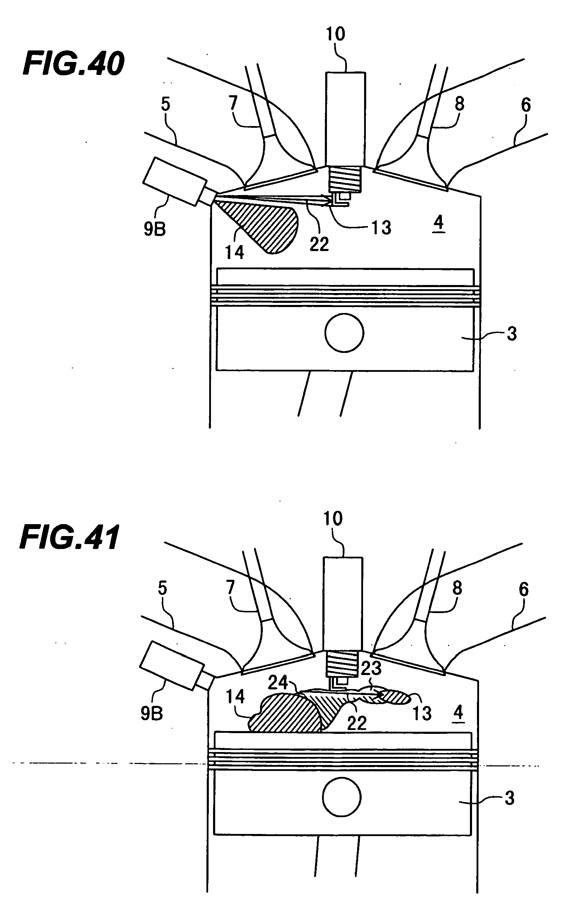

With reference to Figs. 40 to 42, a description is now made of the operation of the cylinder injection type spark ignition engine according to this embodiment during fast idling immediately after the engine startup.

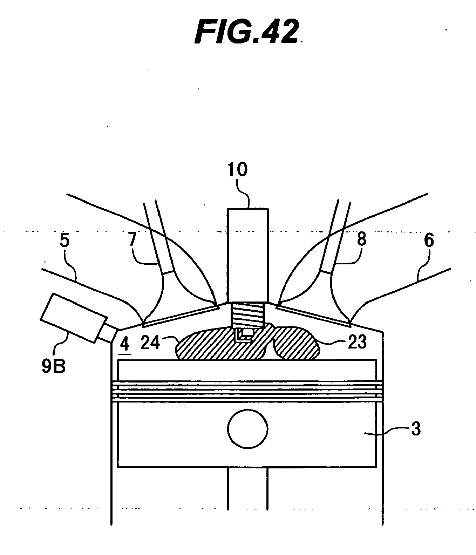

Fig. 40 is a plan view showing a spray state immediately after fuel injection in the cylinder injection type spark ignition engine according to the fifth embodiment of the present invention. Fig. 41 is a plan view showing a spray state at 20° before the top dead center in the cylinder injection type spark ignition engine according to the fifth embodiment of the present invention. Fig. 42 is a plan view showing a spray state before the top dead center in the cylinder injection type spark ignition engine according to the fifth embodiment of the present invention.

Note that, for the sake of explaining the operation, Figs. 40 to 42 are illustrated in the simplified form. Also, in Figs. 40 to 42, the same symbols as those in Fig. 1 denote the same components. Figs. 40 to 42 represent an engine operating state at the engine revolution speed of about 1000 rpm under a low-load condition. Furthermore, the operation from the intake stroke to a stage before fuel injection in the compression stroke is the same as that in the above-described embodiment.

First, a description is made of situations immediately after the fuel injection with reference to Fig. 40.

Because the fuel injection port 19C has a larger diameter, the lead spray 13 has a relatively large diameter. On the other hand, because the fuel injection port 19D has a smaller diameter, the ignition spray 14 has a relatively small diameter. Therefore, the spray speed of the ignition spray 14 having smaller momentum per spray particle tends to more early damp because of friction produced between the ignition spray and air. Hence, the lead spray 13 advances prior to the ignition spray 14. The lead spray 13 generates a jet stream 22 toward in a direction toward the ignition plug 10 because of friction between the lead spray and air while the lead spray is flying within the combustion chamber 4. The ignition spray 14 is hard to generate a jet stream because the fuel injection port 19D is formed in plural at dispersed position so as to provide a smaller spray density.

Next, a description is made of situations at 20° before the top dead center with reference to Fig. 41.

With the lapse of time, the piston 3 is moved upward and the ignition spray 14 stagnates on the upper surface of the piston 3. The jet stream 22 leads, to the ignition plug 10, only a combustion fuel-air mixture 24 evaporated from the ignition spray 14. The lead spray 13 is evaporated while passing the ignition plug 10, and forms a combustion fuel-air mixture 23 around the ignition plug 10.

Next, a description is made of situations at the ignition timing, i.e., when the piston reaches the top dead center, with reference to Fig. 42.

When the piston 3 comes closer to the compression top dead center, the internal pressure of the combustion chamber 4 is abruptly raised, and hence the jet stream 22 having led the combustion fuel-air mixture 24 to the ignition plug 10 disappears until the combustion fuel-air mixture 24 almost reaches the ignition plug 10. Therefore, the combustion fuel-air mixture 24 can be stratified in the vicinity of the ignition plug 10 without going past the ignition plug 10 to a large extent. On the other hand, the combustion fuel-air mixture 23 evaporated from the lead spray 13 stagnates approximately in a position past the ignition plug 10. Accordingly, the combustion fuel-air mixture can be stratified around the ignition plug 10 as shown, and stable stratified charge combustion can be realized at the ignition timing.

Also in this embodiment, as indicated by the region Z shown in Fig. 14, the fuel injection timing can be retarded to 35° before the top dead center, and therefore stable combustion can be realized even at the ignition timing near the top dead center. As a result of the effect of retarding the ignition, therefore, fuel consumption and the exhaust amount of NOx can be reduced.

With this embodiment, as described above, since the jet stream 22 is directly injected from the fuel injection valve 9B, the amount of fuel required for the operation can be injected as the ignition spray 14 and the fuel-air mixture can be concentrated to the ignition plug 10. Therefore, the combustion fuel-air mixture 24 can be stratified around the ignition plug 10 with the aid of the jet stream 22 without directing the lead spray 13 and the jet stream 22 directly toward the ignition plug 10. Hence, the stratified charge combustion with high robustness can be realized without resorting to the tumble produced in the combustion chamber.

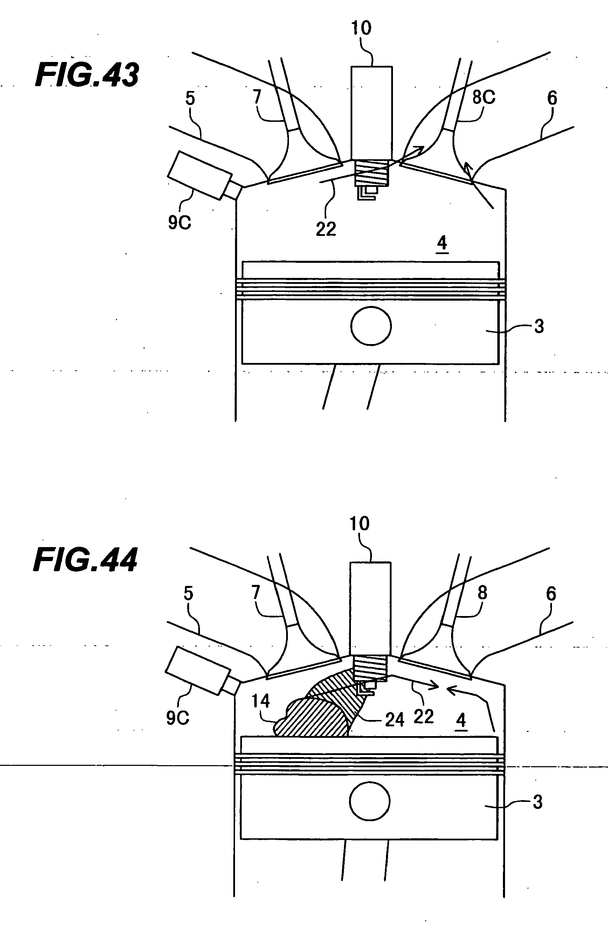

The construction and operation of an cylinder injection type spark ignition engine according to a sixth embodiment of the present invention will be described below with reference to Figs. 43 to 45. The overall construction of the cylinder injection type spark ignition engine according to this sixth embodiment is the same as that shown in Figs. 1 and 2.

A description is first made of a manner of forming a jet stream in the cylinder injection type spark ignition engine according to this embodiment with reference to Fig. 43.

Fig. 43 is a side view of the cylinder injection type spark ignition engine according to the sixth embodiment of the present invention. Note that the same symbols as those in Figs. 1 and 2 denote the same components.

In this embodiment, an exhaust valve 8C is driven by a variable valve mechanism (not shown) so that the opening/-closing timing is variable. The variable valve mechanism is controlled to slightly open the exhaust valve 8C immediately before fuel injection. By slightly opening the exhaust valve 8C during the compression stroke, air under compression is forced to escape through the exhaust valve 8C, whereby a jet stream 22 is formed. A fuel injection valve 9C used in this embodiment is of the ordinary swirl type. Operating conditions are given by the engine revolution speed of about 1000 rpm under a low-load condition during fast idling at the engine startup.

With reference to Figs. 43 to 45, a description is now made of the operation of the cylinder injection type spark ignition engine according to this embodiment during fast idling immediately after the engine startup.

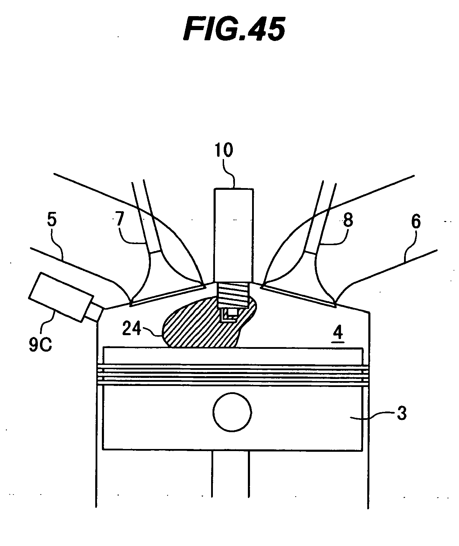

Fig. 44 is a plan view showing a spray state at 20° before the top dead center in the cylinder injection type spark ignition engine according to the sixth embodiment of the present invention. Fig. 45 is a plan view showing a spray state before the top dead center in the cylinder injection type spark ignition engine according to the sixth embodiment of the present invention.

Note that, for the sake of explaining the operation, Figs. 43 to 45 are illustrated in the simplified form. Also, in Figs. 43 to 45, the same symbols as those in Fig. 1 denote the same components. Figs. 43 to 45 represent an engine operating state at the engine revolution speed of about 1000 rpm under a low-load condition. Furthermore, the operation from the intake stroke to a stage before fuel injection in the compression stroke is the same as that in the above-described embodiment.

First, a description is made of situations immediately before the fuel injection with reference to Fig. 43.

Because the pressure in the combustion chamber 4 in the latter stage of the compression stroke is very high, an air flow is generated because of the pressure difference between the combustion chamber 4 and the exhaust port 6 by slightly opening the exhaust valve 8C. At this time, a jet stream 22 flowing from the intake side to the exhaust side is generated with an arrangement that the fuel injection valve 9C is disposed in a wall surface on the intake side and the ignition plug 10 is disposed above the combustion chamber 4 at the center thereof. The exhaust valve 8C is controlled so as to close at the fuel injection timing.

Next, a description is made of situations at 20° before the top dead center with reference to Fig. 44.

With the lapse of time, the piston 3 is moved upward and the ignition spray 14 stagnates on the upper surface of the piston 3. At this time, the jet stream 22 leads, to the ignition plug 10, only a combustion fuel-air mixture 24 evaporated from the ignition spray 14.

Next, a description is made of situations at the ignition timing, i.e., when the piston reaches the top dead center, with reference to Fig. 45.

When the piston 3 comes closer to the compression top dead center, the internal pressure of the combustion chamber 4 is abruptly raised, and hence the jet stream 22 having led the combustion fuel-air mixture 24 to the ignition plug 10 disappears until the combustion fuel-air mixture 24 almost reaches the ignition plug 10. Therefore, the combustion fuel-air mixture 24 can be stratified in a position slightly away from the ignition plug 10 toward the exhaust side without going past the ignition plug 10 to a large extent.

While the above-described method generates the jet stream by opening the exhaust valve, the jet stream may be generated by providing a pipe that allows air to escape to the exhaust side.

Also in this embodiment, as indicated by the region Z shown in Fig. 14, the fuel injection timing can be retarded to 35° before the top dead center, and therefore stable combustion can be realized even at the ignition timing near the top dead center. As a result of the effect of retarding the ignition, therefore, fuel consumption and the exhaust amount of NOx can be reduced.

With this embodiment, as described above, since the jet stream 22 is directly injected from the fuel injection valve 9C, the amount of fuel required for the operation can be all injected as the ignition spray 14 and the fuel-air mixture can be concentrated to the ignition plug 10. Therefore, the combustion fuel-air mixture 24 can be stratified around the ignition plug 10 with the aid of the jet stream 22A without directing the jet stream directly toward the ignition plug 10. Hence, the stratified charge combustion with high robustness can be realized without resorting to the tumble produced in the combustion chamber.

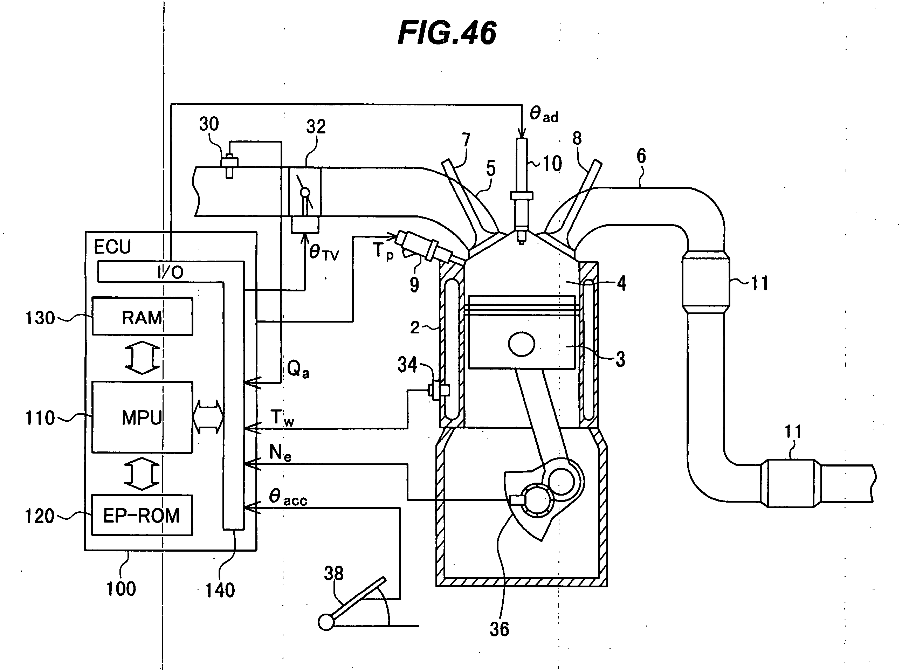

The configuration and operation of an engine control system using an cylinder injection type spark ignition engine according to a seventh embodiment of the present invention will be described below with reference to Figs. 46 to 48.

A description is first made of the configuration of the engine control system using the cylinder injection type spark ignition engine according to this embodiment with reference to Fig. 46.

Fig. 46 is a system block diagram showing the configuration of the engine control system using the cylinder injection type spark ignition engine according to the seventh embodiment of the present invention. Note that the same symbols as those in Figs. 1 and 2 denote the same components.

Two intake ports 5 and two exhaust ports 6 are opened to a combustion chamber 4. At openings of the two intake ports 5, two intake valves 7 are provided respectively to open and close the openings. Also, at openings of the two exhaust ports 6, two exhaust valves 8 are provided respectively to open and close the openings. A fuel injection valve 9 is provided in a wall surface of the combustion chamber 4 on the intake side. Further, an ignition plug 10 is provided above the combustion chamber 4 at the center thereof. The fuel injection valve 9 has the same construction as that shown in Figs. 4 and 5. As an alternative, the fuel injection valve 9 may be constructed as shown in Figs. 17 and 18, Figs. 28 and 29, or Figs. 36 and 37. Additionally, the positional relationship between the fuel injection valve 9 and the ignition plug 10 is the same as that shown in Fig. 8.

Further, an airflow rate sensor 30 for measuring an intake airflow rate Qa is disposed in an intake pipe upstream of the intake port 5. The measured intake airflow rate Qa is taken in by an engine control unit (ECU) 100. An electronic control throttle 32 is also disposed in the intake pipe. An opening degree θTV of the electronic control throttle 32 is controlled by the ECU 100.

A water temperature sensor 34 is disposed in a cylinder block 2. A water temperature Tw detected by the water temperature sensor 34 is taken in by the ECU 100. A crank angle sensor 36 is disposed on an engine crankshaft. An engine revolution speed Ne detected by the crank angle sensor 36 is taken in by the ECU 100. Further, a depression amount θacc of an accelerator pedal 38 is taken in by the ECU 100.

The ECU 100 comprises an MPU 110 for executing control processing, an EP-ROM 120 storing a control program, a RAM 130 as a memory used for executing control, and an I/O 140 for executing input/output processing for information transfer with respect to the external sensors and actuators. The ECU 100 computes a fuel injection amount Tp based on both the engine revolution speed Ne detected by the crank angle sensor 36 and the intake airflow rate Qa detected by the airflow rate sensor 30, and then outputs a fuel injection signal to the fuel injection valve 9. The ECU 100 computes an ignition timing signal θad based on the engine revolution speed Ne detected by the crank angle sensor 36, the depression amount θacc of the accelerator pedal 38 and the water temperature Tw detected by the water temperature sensor 34, and then outputs the ignition signal to the ignition plug 10. The ECU 100 computes the throttle opening degree θTV based on the depression amount θacc of the accelerator pedal 38, and then outputs a throttle opening signal to the electronic control throttle 32.

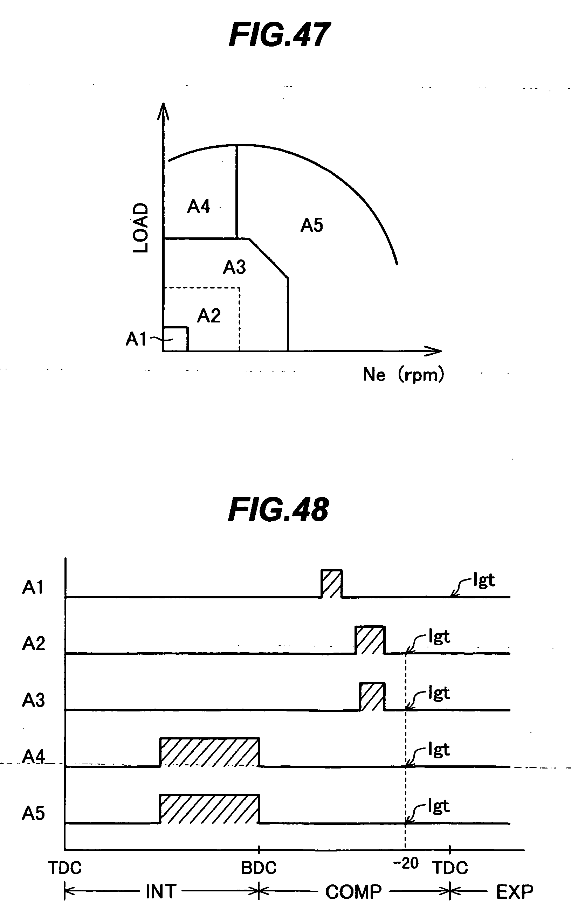

A description is now made of details of fuel injection control and ignition timing control both executed by the ECU 100 in various operating regions with reference to Figs. 47 and 48.

Fig. 47 is a graph for explaining operating regions in the engine control system using the cylinder injection type spark ignition engine according to the seventh embodiment of the present invention. Fig. 48 is a chart for explaining details of control executed by the engine control system using the cylinder injection type spark ignition engine according to the seventh embodiment of the present invention.

In Fig. 47, the horizontal axis represents the engine revolution speed Ne (rpm). The vertical axis represents load. A region A1 indicates a cranking region. In the cranking region, the air/fuel ratio (A/F) is controlled to, e.g., 40. A region A2 indicates an idle region. In the idle region, the air/fuel ratio (A/F) is controlled to, e.g., 40. A region A3 indicates a medium/low-load and medium/low-speed revolution region. In the medium/low-load and medium/low-speed revolution region, the air/fuel ratio (A/F) is controlled to, e.g., 25 to 35. In the regions A1 to A3, the stratified charge combustion is performed.

A region A4 indicates a high/medium-load and low-speed revolution region. In the high/medium-load and low-speed revolution region, the air/fuel ratio (A/F) is controlled to, e.g., 14.7. A region A5 indicates a medium/low-load and high-speed revolution region. In the medium/low-load and high-speed revolution region, the air/fuel ratio (A/F) is controlled to, e.g., 14.7.

Next, in Fig. 48, the horizontal axis represents a crank angle. Also, the horizontal axis represents an intake stroke (INT), a compression stroke (COM), and an expansion stroke (EXP). A hatched area in Fig. 48 indicates fuel injection timing. Further, an arrow Igt indicates ignition timing.

In the region A1, the stratified charge combustion is performed such that the air/fuel ratio (A/F) is held at, e.g., 40, as described above. To that end, the fuel injection is started in the compression stroke (COMP) approximately at 60° before the top dead center (TDC). The ignition timing is set coincident with the top dead center (TDC).

In the region A2, the stratified charge combustion is performed such that the air/fuel ratio (A/F) is held at, e.g., 40, as described above. Also, in the region A3, the stratified charge combustion is performed such that the air/fuel ratio (A/F) is held at, e.g., 25 to 35, as described above. To that end, during idling, the fuel injection is started in the compression stroke (COMP) approximately over 40 to 35° before the top dead center (TDC). During fast idling, the fuel injection is started approximately over 50 to 40° before the top dead center (TDC). The ignition timing is set at 20° before the top dead center (TDC).

In the regions A4 and A5 the air/fuel ratio (A/F) is controlled to, e.g., 14.7, as described above. To that end, the fuel injection is performed in the compression stroke (COMP) such that the fuel injection is completed at the bottom dead center (BDC). The ignition timing is set at 20° before the top dead center (TDC).

With this embodiment, as described above, the stratified charge combustion with high robustness can be realized, and fuel consumption and the exhaust amount of NOx can be reduced.

### Industrial Applicability

According to the present invention, the stratified charge combustion with high robustness can be realized without resorting to the tumble produced in the combustion chamber.

## Claims

1. A cylinder injection type spark ignition engine comprising a fuel injection valve (9; 9A; 9B) for directly injecting fuel into a combustion chamber, in which the fuel is injected into said combustion chamber during a compression stroke by said fuel injection valve, and a single ignition plug (10) arranged at an upper center of the cylinder (10) for Bring a fuel-air mixture to perform stratified charge combustion,
said spark ignition engine comprising an ignition spray supplying means (9; 9A; 9B) for supplying an ignition spray (14; 24), and lead fluid generating means (9; 9A; 9B) for generating, separately from an air flow supplied to said combustion chamber through an intake port, a lead fluid (13; 22) supplied in a direction toward said ignition plug, which has a higher flow density than said ignition spray;
wherein said ignition spray (14; 24) is relatively widely dispersed and has a lower flow density than said lead fluid and is led by said lead fluid (13; 22) to said ignition plug so that the ignition spray is supplied to said ignition plug later than said lead fluid, and
wherein further an ignition timing by said ignition plug (10) is set after the timing that the ignition spray (14; 24) following the lead fluid (13; 22) reaches said ignition plug (10).

2. A cylinder injection type spark ignition engine according to claim 1,
**characterized in that**
said lead fluid generating means and said ignition spray supplying means are constituted by a single fuel injection valve, and
a fuel spray having a high flow density directing to said ignition plug forms said lead fluid, and a fuel spray having a low flow density directing a piston forms said ignition fuel spray.

3. Cylinder injection type spark ignition engine according to claim 2, **characterized in that** said fuel injection valve has a cutout (19A) partly formed in a fuel injection port thereof, said cutout being oriented toward the ignition plug side.

4. Cylinder injection type spark ignition engine according to claim 2, **characterized in that** said fuel injection valve has a cutout partly formed in a fuel injection port thereof, said cutout being oriented slightly offset from a direction toward the ignition plug side.

5. Cylinder injection type spark ignition engine according to claim 2, **characterized in that** said fuel injection valve (9B) has a fuel injection port (19C) with a larger diameter opening for injecting the lead spray, and a fuel injection port (19D) made up of a plurality of smaller diameter openings for injecting the ignition fuel spray.

6. Cylinder injection type spark ignition engine according to claim 1, **characterized in that** said lead fluid generating means is a fuel injection valve having an injection port (19B) for an air jet toward the ignition plug side, and an injection port (19A) for injecting the ignition fuel spray on the piston side.

7. Cylinder injection type spark ignition engine according to claim 1, **characterized in that** said lead fluid generating means form a jet stream flowing toward said ignition plug by opening an exhaust valve (8C) during the compressing stroke.

8. Cylinder injection type spark ignition engine according to claim 1, **characterized in that** fuel injection is started by said fuel injection valve in a range of from 62° before the top dead center to 35° before the top dead center.

## Patentansprüche

1. Funkengezündete Brennkraftmaschine mit Zylindereinspritzung mit einem Kraftstoffeinspritzventil (9; 9A; 9B) zum direkten Einspritzen von Kraftstoff in eine Brennkammer, bei der der Kraftstoff während eines Verdichtungshubs durch das Kraftstoffeinspritzventil in die Brennkammer eingespritzt wird, und einer einzelnen Zündkerze (10), die an einer oberen Mitte des Zylinders (10) zum Zünden eines Luft/Kraftstoff-Gemischs zur Durchführung einer Schichtladungsverbrennung angeordnet ist,
wobei die funkengezündete Brennkraftmaschine eine Zündsprühnebel-Zufuhreinrichtung (9; 9A; 9B) zum Zuführen eines Zündsprühnebels (14; 24) und eine Leiterfluid-Erzeugungseinrichtung (9; 9A; 9B) zum Erzeugen, getrennt von einem Luftstrom, der der Brennkammer durch eine Einlassöffnung zugeführt wird, eines in einer Richtung zur Zündkerze hin zugeführten Leiterfluids (13; 22) umfasst, das eine höhere Flussdichte als der Zündsprühnebel hat;
wobei der Zündsprühnebel (14; 24) relativ breit dispergiert ist und eine niedrigere Flussdichte als das Leiterfluid hat und von dem Leiterfluid (13; 22) zur Zündkerze geführt wird; so dass der Zündsprühnebel der Zündkerze später als das Leiterfluid zugeführt wird, und wobei weiterhin ein Zündzeitpunkt durch die Zündkerze (10) nach dem Zeitpunkt, zu welchem der dem Leiterfluid (13; 22) folgende Zündsprühnebel (14; 24) die Zündkerze (10) erreicht, eingestellt ist.

2. Funkengezündete Brennkraftmaschine mit Zylindereinspritzung nach Anspruch 1, **dadurch gekennzeichnet, dass** die Leiterfluid-Erzeugungseinrichtung und die Zündsprühnebel-Zufuhreinrichtung durch ein einzelnes Kraftstoffeinspritzventil gebildet werden, und
ein Kraftstoffsprühnebel mit einer hohen Flussdichte, der auf die Zündkerze gerichtet ist, das Leiterfluid bildet und ein Kraftstoffsprühnebel mit niedriger Flussdichte, der auf einen Kolben gerichtet ist, den Zündsprühnebel bildet.

3. Funkengezündete Brennkraftmaschine mit Zylindereinspritzung nach Anspruch 2, **dadurch gekennzeichnet, dass** das Kraftstoffeinspritzventil einen Ausschnitt (19A) aufweist, der teilweise in einer Kraftstoffeinspritzöffnung davon ausgebildet ist, wobei der Ausschnitt zur Zündkerzenseite hin ausgerichtet ist.

4. Funkengezündete Brennkraftmaschine mit Zylindereinspritzung nach Anspruch 2, **dadurch gekennzeichnet, dass** das Kraftstoffeinspritzventil einen Ausschnitt aufweist, der teilweise in einer Kraftstoffeinspritzöffnung davon ausgebildet ist, wobei der Ausschnitt leicht versetzt von einer Richtung zur Zündkerzenseite hin ausgerichtet ist.

5. Funkengezündete Brennkraftmaschine mit Zylindereinspritzung nach Anspruch 2, **dadurch gekennzeichnet, dass** das Kraftstoffeinspritzventil (9B) eine Kraftstoffeinspritzöffnung (19C) mit einer Öffnung größeren Durchmessers zum Einspritzen des Leitersprühnebels und eine Kraftstoffeinspritzöffnung (19D) aufweist, die aus mehreren Öffnungen kleineren Durchmessers zum Einspritzen des Zündkraftstoffsprühnebels besteht.

6. Funkengezündete Brennkraftmaschine mit Zylindereinspritzung nach Anspruch 1, **dadurch gekennzeichnet, dass** die Leiterfluid-Erzeugungseinrichtung ein Kraftstoffeinspritzventil ist, das eine Einspritzöffnung (19B) für einen Luftstrahl zur Zündkerzenseite hin und eine Einspritzöffnung (19A) zum Einspritzen des Zündkraftstoffsprühnebels auf der Kolbenseite aufweist.

7. Funkengezündete Brennkraftmaschine mit Zylindereinspritzung nach Anspruch 1, **dadurch gekennzeichnet, dass** die Leiterfluid-Erzeugungseinrichtung einen Strahlstrom bildet, der durch Öffnen eines Ausstoßventils (8C) während des Verdichtungshubs zu der Zündkerze hin fließt.

8. Funkengezündete Brennkraftmaschine mit Zylindereinspritzung nach Anspruch 1, **dadurch gekennzeichnet, dass** die Kraftstoffeinspritzung durch das Kraftstoffeinspritzventil in einem Bereich von 62° vor dem oberen Totpunkt bis 35° vor dem oberen Totpunkt begonnen wird.

## Revendications

1. Moteur à allumage par étincelle du type à injection directe, comprenant une soupape d'injection de carburant (9 ; 9A ; 9B) pour injecter directement du carburant dans une chambre de combustion, dans lequel le carburant est injecté dans ladite chambre de combustion au cours d'une course de compression par ladite soupape d'injection de carburant et une bougie d'allumage unique (10) disposée au centre supérieur du cylindre (10) pour enflammer un mélange carburant - air dans le but de réaliser une combustion de charge stratifiée,
ledit moteur à allumage par étincelle, comprenant un moyen de fourniture d'une pulvérisation d'allumage (9 ; 9A ; 9B) pour fournir une pulvérisation d'allumage (14 ; 24), et un moyen de production d'un fluide directeur (9 ; 9A ; 9B) pour produire, séparément d'un flux d'air fourni à ladite chambre de combustion par le biais d'un orifice d'admission, un fluide directeur (13 ; 22) fourni dans une direction allant vers ladite bougie d'allumage, qui a une densité de flux supérieure à ladite pulvérisation d'allumage ;
dans lequel ladite pulvérisation d'allumage (14 ; 24) est relativement largement dispersée et a une densité de flux inférieure audit fluide directeur et est dirigée par ledit fluide directeur (13 ; 22) sur ladite bougie d'allumage de sorte que la pulvérisation d'allumage soit fournie à ladite bougie d'allumage plus tard que ledit fluide directeur, et
dans lequel, en outre, un réglage de l'allumage par ladite bougie d'allumage (10) est fixé après le réglage où la pulvérisation de l'allumage (14 ; 24) en suivant le fluide directeur (13 ; 22) atteint ladite bougie d'allumage (10).

2. Moteur à allumage par étincelle du type à injection directe selon la revendication 1, **caractérisé en ce que**
ledit moyen de production d'un fluide directeur et ledit moyen de fourniture de la pulvérisation d'allumage sont constitués par une unique soupape d'injection de carburant, et
une pulvérisation de carburant ayant une densité de flux élevée se dirigeant sur ladite bougie d'allumage forme ledit fluide directeur, et une pulvérisation de carburant ayant une densité de flux faible dirigeant un piston forme ladite pulvérisation de carburant d'allumage.

3. Moteur à allumage par étincelle du type à injection directe selon la revendication 2, **caractérisé en ce que** ladite soupape d'injection de carburant a une échancrure (19A) partiellement formée dans un orifice d'injection de carburant de celle-ci, ladite échancrure étant orientée en direction du côté de la bougie d'allumage.

4. Moteur à allumage par étincelle du type à injection directe selon la revendication 2, **caractérisé en ce que** ladite soupape d'injection de carburant a une échancrure partiellement formée dans un orifice d'injection de carburant de celle-ci, ladite échancrure étant orientée légèrement en décalage par rapport à une direction allant du côté de la bougie d'allumage.

5. Moteur à allumage par étincelle du type à injection directe selon la revendication 2, **caractérisé en ce que** ladite soupape d'injection de carburant (9B) a un orifice d'injection de carburant (19C) avec une ouverture de diamètre plus grand pour injecter la pulvérisation directrice et un orifice d'injection de carburant (19D) constitué d'une pluralité d'ouvertures de diamètre inférieur pour l'injection de la pulvérisation de carburant d'allumage.

6. Moteur à allumage par étincelle du type à injection directe selon la revendication 1, **caractérisé en ce que** ledit moyen de production du fluide directeur est une soupape d'injection de carburant ayant un orifice d'injection (19B) pour un jet d'air en direction du côté de la bougie d'allumage et un orifice d'injection (19A) pour injecter la pulvérisation de carburant d'allumage du côté du piston.

7. Moteur à allumage par étincelle du type à injection directe selon la revendication 1, **caractérisé en ce que** ledit moyen de production du fluide directeur forme un courant de jet circulant en direction de ladite bougie d'allumage par l'ouverture d'une soupape d'échappement (8C) au cours de la course de compression.

8. Moteur à allumage par étincelle du type à injection directe selon la revendication 1, **caractérisé en ce que** l'injection de carburant est lancée par ladite soupape d'injection de carburant sur une distance allant de 62° avant le point mort supérieur à 35° avant le point mort supérieur.
